(19) Europäisches Patentamt
European Patent Office
Office européen des brevets

(11) **EP 2 433 287 B1**

(12) **FASCICULE DE BREVET EUROPEEN**

(45) Date de publication et mention
de la délivrance du brevet:
**13.03.2013 Bulletin 2013/11**

(51) Int Cl.:
*G21F 9/30* (2006.01)    *B01J 39/16* (2006.01)
*B01J 20/02* (2006.01)    *B01J 20/06* (2006.01)
*B01J 20/30* (2006.01)

(21) Numéro de dépôt: **10723080.7**

(22) Date de dépôt: **20.05.2010**

(86) Numéro de dépôt international:
**PCT/EP2010/057009**

(87) Numéro de publication internationale:
**WO 2010/133689 (25.11.2010 Gazette 2010/47)**

(54) **MATERIAU SOLIDE NANOCOMPOSITE A BASE D'HEXA- ET OCTACYANOMETALLATES, SON PROCEDE DE PREPARATION ET PROCEDE DE FIXATION DE POLLUANTS MINERAUX LE METTANT EN ŒUVRE**

NANOCOMPOSIT-FESTSTOFFMATERIAL AUF DER BASIS VON HEXA-UND OCTACYANOMETALLATEN, SEIN HERSTELLUNGSVERFAHREN UND VERFAHREN ZUR IMMOBILISIERUNG VON MINERALISCHEN ABFALLSTOFFEN MITTELS DESSELBEN

SOLID NANOCOMPOSITE MATERIAL ON THE BASIS OF HEXA-AND OCTACYANOMETALLATES, THEIR PREPARATION METHOD AND METHOD FOR IMMOBILIZING MINERAL POLLUANTS BY USING THE SAME

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **20.05.2009 FR 0953379**

(43) Date de publication de la demande:
**28.03.2012 Bulletin 2012/13**

(73) Titulaires:
• **Commissariat à l'Énergie Atomique et aux Énergies Alternatives 75015 Paris (FR)**
• **Centre National de la Recherche Scientifique CNRS 75016 Paris (FR)**
• **Université Montpellier II 34000 Montpellier (FR)**

(72) Inventeurs:
• **GRANDJEAN, Agnès F-30330 Saint-Marcel-de-Careiret (FR)**
• **BARRE, Yves F-84100 Uchaux (FR)**

• **GUARI, Yannick F-34730 Prades le Lez (FR)**
• **LARIONOVA, Joulia F-34730 Prades le Lez (FR)**
• **GUERIN, Christian F-34790 Grabels (FR)**

(74) Mandataire: **Ilgart, Jean-Christophe et al Brevalex 95, rue d'Amsterdam F-75378 Paris Cedex 8 (FR)**

(56) Documents cités:
**US-B1- 6 482 380**

• **FOLCH B ET AL: "synthesis and behaviour of size controlled cyano-bridged coordination polymer nanoparticles with hybrid mesoporous silica", NEW JOURNAL OF CHEMISTRY, ROYAL SOCIETY OF CHEMISTRY, GB, vol. 32, 1 janvier 2008 (2008-01-01), pages 273-282, XP008119516, ISSN: 1144-0546 [extrait le 2007-11-12] cité dans la demande**

**Description**

**DOMAINE TECHNIQUE**

L'invention concerne un matériau solide nanocomposite à base d'hexa- et octacyanométallates.

Plus précisément, l'invention a trait à un matériau solide nanocomposite comprenant des nanoparticules d'un polymère de coordination métallique à ligands CN comprenant des cations métalliques et des anions hexa- et octacyanométallates, notamment des anions hexa- et octacyanoferrates, lesdites nanoparticules étant liées par une liaison organométallique à un greffon organique fixé chimiquement à l'intérieur des pores d'un support solide poreux.

La présente invention a également trait au procédé de préparation dudit matériau solide.

La présente invention concerne également un procédé de fixation de polluants minéraux contenus dans une solution mettant en oeuvre ledit matériau.

Le domaine technique de l'invention peut de manière générale être défini comme celui des fixateurs minéraux.

**ÉTAT DE LA TECHNIQUE ANTÉRIEURE**

De nombreux fixateurs minéraux ont été utilisés pour la fixation de divers polluants minéraux tels que des cations métalliques contenus dans les milieux et effluents divers issus de diverses industries et en particulier de l'industrie nucléaire.

En effet, l'industrie nucléaire utilise pour le traitement des effluents de faible ou moyenne radioactivité, notamment dans les activités d'assainissement et de démantèlement, des techniques d'épuration avec réduction de volume consistant dans la fixation sur solide minéral des radio-isotopes présents dans les solutions, soit par échanges ioniques, soit par coprécipitation afin de concentrer, confiner, la radioactivité dans un volume réduit.

Les volumes traités actuellement sont énormes et atteignent plusieurs dizaines de milliers de m$^3$ fan pour la France. Les liquides traités sont également de nature variée puisqu'il s'agit aussi bien de traiter les eaux de refroidissement primaire des centrales nucléaires que les effluents divers entrant en contact avec des radio-isotopes.

On peut ainsi citer comme exemples d'effluents radioactifs qui nécessitent un traitement :

- les effluents issus des opérations de traitement du combustible nucléaire usé,
- les concentrâts d'évaporation,
- les effluents des piscines d'entreposage du combustible nucléaire usé,
- tous les effluents de lavage et de rinçage tels que les effluents provenant du rinçage et du lavage des installations, des laboratoires de contrôle, des sanitaires des zones contrôlées, etc.
- les solutions de régénération des résines etc.

Parmi les fixateurs minéraux classiques mis en oeuvre notamment dans l'industrie nucléaire, on peut citer les produits à base d'oxydes de manganèse de type Manox® qui sont utilisés pour fixer des éléments présents en solution, sous diverses formes chimiques, lesdits éléments étant par exemple Ag, Sb, Ra, ou Pb ; et l'hydroxyde de fer utilisé pour fixer par coprécipitation les transuraniens. Cependant, la séparation du césium des effluents aqueux est difficile avec ces fixateurs minéraux classiques car il a une faible affinité pour ceux-ci.

Or, la décontamination en césium radioactif des effluents liquides est un problème majeur. En effet, le $^{137}$Cs qui a une demi-vie voisine de 30 ans et le $^{135}$Cs qui a une demi-vie d'environ 2 10$^6$ ans, sont parmi les produits de fission de l'uranium les plus abondants, tandis que le $^{134}$Cs qui a une demi-vie d'environ 2 ans est un produit d'activation des centrales nucléaires.

Les hexacyanoferrates (II) et (III) de nombreux métaux de transition possèdent quant à eux une très forte affinité pour le césium sur une grande plage de pH et une bonne résistance à l'irradiation [1] [2].

C'est la raison pour laquelle les hexacyanoferrates notamment les hexacyanoferrates insolubles tels que les hexacyanoferrates (II) de Cu, Ni et Co, mais aussi les hexacyanoferrates de métaux alcalins sont parmi les fixateurs minéraux les plus couramment utilisés, en particulier dans l'industrie nucléaire pour séparer, récupérer et fixer les ions métalliques. Ces hexacyanoferrates insolubles ou de métaux alcalins sont utilisés en particulier en tant qu'échangeurs ioniques pour fixer les ions de métaux alcalins radioactifs tels que le césium 137 à longue demi-vie à partir de divers effluents industriels et nucléaires, par exemple à partir des solutions fortement acides issues du retraitement des combustibles irradiés et des solutions déjà citées plus haut.

Actuellement, les hexacyanoferrates insolubles entrent ainsi dans la plupart des procédés de traitement des déchets radioactifs liquides par coprécipitation.

Le nickel hexacyanoferrate (II) de potassium (KNiFC) est l'échangeur ionique le plus étudié pour la décontamination du Cs. L'extraction du césium se fait par échange ionique 1 pour 1 entre le potassium et le Cs de la solution à traiter. Ce matériau est obtenu de façon industrielle par la coprécipitation de Ni (NO$_3$) et de K$_4$Fe (CN)$_6$ [3].

Les hexacyanoferrates, s'ils présentent des sélectivités élevées, présentent toutefois le défaut essentiel d'avoir une faible stabilité, tenue, mécanique, qui rend difficile, voire impossible leur conditionnement en colonne à cause d'une diminution du volume occupé par le fixateur et éventuellement d'un colmatage, qui limite le nombre de passages de la solution dans la colonne.

Les hexacyanoferrates lorsqu'ils sont préparés sous forme de poudre forment des grains mécaniquement instables et sont mécaniquement fragiles, tandis que sous forme massive compacte, leur faible surface spécifique conduit souvent à des cinétiques de réaction lentes, ce qui limite fortement leur efficacité.

Il est, en effet, généralement difficile d'allier une forme compacte à une vitesse de réaction élevée.

Harjula et al., en Finlande, ont été les premiers à proposer d'utiliser des hexacyanoferrate massifs pour un procédé de décontamination en colonne à l'échelle industrielle [4], [5]. Il s'agit de cobalt-hexacyanoferrates (II) de potassium massifs qui sont mis en oeuvre pour traiter seulement des volumes limités de solutions à cause du colmatage.

Pour augmenter la tenue mécanique de ces matériaux hexacyanoferrates, afin de les utiliser dans un procédé de décontamination en colonne, au moins trois solutions sont proposées dans l'art antérieur :

- · la première consiste à synthétiser ces matériaux par précipitation sur un support solide telle qu'une résine organique, ou une bentonite ;
- · la seconde consiste à précipiter des particules de ces matériaux au sein de polymères insolubles, tel que le poly (acétate de vinyle) ;
- · enfin la troisième consiste à faire précipiter des particules de ces matériaux directement au sein d'un support inorganique poreux par exemple du type silice mésoporeuse.

On obtient ainsi des matériaux composites comprenant les hexacyanoferrates et un support solide. Ce support solide peut être un support organique ou un support inorganique.

Si l'on s'intéresse aux matériaux composites à supports organiques, on peut notamment faire référence au document de Harjula et al. [6], qui, après avoir testé des hexacyanoferrates massifs, ont proposé d'utiliser des fines particules d'hexacyanoferrates en mélange à un polymère organique pour synthétiser des résines échangeuses d'ions hybrides inorganiques/organiques. La description du procédé de synthèse n'est pas présentée.

La stabilité de ces composites à support organique est meilleure, mais la présence majoritaire de composés organiques limite fortement les possibilités d'utilisations à cause notamment de la radiolyse et pose des problèmes pour l'exutoire de ces matériaux.

En particulier, la présence de composés organiques en fortes quantités limite le conditionnement de ces déchets par une voie classique du type vitrification à cause des difficultés rencontrées lors de la calcination et de la diminution du débit de synthèse du verre.

De plus, la partie minérale a toujours la propriété de non réversibilité de la fixation.

Si l'on s'intéresse maintenant aux matériaux composites à support inorganique, minéral, ils peuvent être préparés par synthèse par co-précipitation au sein du support, par synthèse par voie sol-gel, par synthèse directe au sein d'un support inorganique poreux, ou par d'autres voies.

Un procédé de synthèse par co-précipitation au sein du support est décrit dans le document de Mimura et *al*. [7] qui propose une co-précipitation par voie directe sur un support inorganique pour la décontamination du Cs par un procédé en colonne. Du nickel hexacyanoferrate (II) de potassium (KNiFC) est synthétisé au sein d'un gel de silice par imprégnation successive des macro-pores avec des solutions de Ni $(NO_3)_2$ puis de $K_4Fe(CN)_6$. Le KNiFC est alors dispersé de façon uniforme au sein de la matrice de gel de silice et le pourcentage de remplissage en KNiFC est contrôlé par le nombre de cycles d'imprégnation.

Plus récemment, le document de Ambashta et al. [8] propose l'utilisation d'un composite magnétite - nickel hexacyanoferrate de potassium pour la décontamination du Cs à partir d'effluents radioactifs, assistée par un champ magnétique. Ce composite est obtenu par coprécipitation en milieu aqueux du KNiFC sur des particules de magnétite. Ce complexe magnétique a, d'après les auteurs, les mêmes propriétés que le KNiFC classique mais permet une récupération beaucoup plus aisée des particules après la séparation du Cs grâce au caractère magnétique de ces particules.

Avec ce type de synthèse par co-précipitation au sein du support, la composition du produit final est mal contrôlée et ses propriétés sont peu reproductibles. En effet, la quantité d'hexacyanoferrate déposée est très mal maîtrisée par la co-précipitation puisque l'adhésion du fixateur minéral sur le support inorganique se fait de façon uniquement mécanique et que le fixateur hexacyanoferrate est donc faiblement lié au support. Le fixateur peut donc être facilement détaché au cours de l'étape de décontamination. Cette synthèse met également en oeuvre systématiquement une grande quantité d'hexacyanoferrate, ce qui est gênant pour le traitement et le conditionnement des déchets ainsi générés.

Un procédé de synthèse directe par voie sol-gel est décrit dans le document de Mardan et al. [9] où il est proposé d'effectuer la précipitation de l'hexacyanoferrate directement au cours de la gélification d'un sol de silice. Pour ce faire, un sol de silice est d'abord gélifié en présence d'une solution de $K_4Fe(CN)_6$. Puis, l'hydrogel obtenu $SiO_2$-$K_4Fe$

(CN)$_6$ est mélangé à une solution de Co(NO$_3$) dans l'acétone pour obtenir l'hydrogel SiO$_2$-KCoFC. Ce composite est ensuite lavé puis séché à l'air à 115°C. Des particules de composites SiO$_2$-KCoFC poreux de surface de pores de l'ordre de 180 m$^2$/g avec des diamètres de pores entre 0,005 et 0,01 $\mu$m et un volume de pores de l'ordre de 0,4 cm$^3$/g sont ainsi obtenues.

La composition de l'hexacyanoferrate obtenu est mal maîtrisée. Un composite de composition K$_{1,69}$Co$_{0,93}$Fe(CN)$_6$, avec un rapport de l'ordre de 0,15g KCoFC/g de SiO$_2$ est obtenu. Ce composite est testé dans une solution modèle (1M HCl, avec 10 ppm de Cs) dans un procédé en « batch » , et non sur colonne. Dans ces conditions, un Kd de 5,73 10$^5$ ml/g de composite est obtenu.

Un autre exemple de ce type de matériau inorganique-inorganique hybride a été proposé plus récemment dans les documents [10] et [10bis], puis commercialisé. Ici également, la description du procédé de synthèse est succincte.

Comme précédemment, il semble qu'il s'agit de synthétiser directement le nickel-hexacyanoferrate de potassium au sein d'un gel d'hydroxyde de zirconium. Selon les auteurs de cet article, l'hydroxyde de zirconium a été choisi pour des applications à des solutions basiques, à savoir avec d'un pH> 12. Le matériau obtenu, dénommé « Thermoxid-35 » se présente sous la forme de granulés de 0,4 à 1 mm de diamètre, contenant de l'ordre de 33% en masse de ZrO$_2$, 38% en masse d'eau et 28% en masse de nickel-hexacyanoferrate de potassium.

Ce matériau présente une porosité dont le volume de pores est de l'ordre de 0,35 à 0,4 cm$^3$/g pour une taille de pores de l'ordre de 6 nm. Ce composite a été testé pour l'adsorption du Cs à des concentrations allant de 0,01 à 2,0 mmol/L dans une solution dont le pH varie entre 6,2 et 9,6 et en présence de 1 mol/L de NaCl. Dans tous les cas, des Kd supérieurs à 1,0 10$^4$ cm$^3$/g sont obtenus.

Comme la synthèse par co-précipitation classique, l'élaboration de composites par coprécipitation *in situ* par voie sol-gel utilise également une grande quantité d'hexacyanoferrate, qui peut atteindre jusqu'à 30%, mais aussi une quantité non négligeable d'eau. Ceci peut poser des problèmes pour le traitement et le conditionnement des déchets ainsi générés. En effet, ces fortes quantités d'eau peuvent entraîner la libération d'hydrogène par radiolyse au cours du stockage.

De plus, des tests au laboratoire ont montré que la cinétique de sorption sur le « Thermoxid » était très lente car il faut environ 300 heures pour atteindre l'équilibre.

Enfin, la vitrification éventuelle de ces composés riches en hexacyanoferrate peut entraîner un dégagement d'acide cyanhydrique toxique et qui pourrait favoriser la volatilisation du césium ainsi fixé, rendant alors la décontamination inopérante.

La synthèse directe d'hexacyanoferrate au sein d'un support inorganique poreux est décrite dans les documents [11], [12] et [13] de Loos Neskovic et al. qui proposent d'utiliser des billes de silice poreuses recouvertes d'un polymère échangeur d'anions sur lequel est fixé un hexacyanoferrate de métal insoluble sous forme de couche mince.

Dans ce composite, l'anion hexacyanoferrate de métal est adsorbé sur le polymère par des interactions électrostatiques.

Le procédé utilisé pour synthétiser ce composite est le suivant : une imprégnation d'un support minéral poreux tel que de la silice avec une solution de polymère, par exemple de type polyvinylimidazole ou polyamine, est tout d'abord réalisée. Puis, le support ainsi revêtu est réticulé à l'aide d'un agent de réticulation tel que l'iodure de méthyle. On peut éventuellement créer des groupements cationiques, comme des groupements ammonium, phosphonium, sulfonium, sur ce polymère.

A l'issue de ces étapes, on a un support solide revêtu d'une pellicule de polymère échangeur d'anions.

L'étape suivante consiste à imprégner ce matériau avec une solution aqueuse d'hexacyanoferrate(II) ou (III) de métal alcalin (sodium ou potassium). On obtient ainsi la fixation de la partie anionique Fe(CN)$_6^{4-}$ sur les groupements cationiques du polymère. Cette fixation se fait par la formation de liaisons de type électrostatique. L'étape suivante, après lavage, consiste à plonger ce support solide dans un sel, par exemple le nitrate de cuivre, dont le métal correspond à l'hexacyanoferrate insoluble que l'on souhaite obtenir. La teneur pondérale en hexacyanoferrate de métal, par exemple cuivre ou nickel, insoluble est de l'ordre de 3% par rapport à la masse du support minéral tel que la silice.

Ce matériau peut ensuite être conditionné en colonne et il peut être mis en oeuvre en continu dans un procédé de décontamination de solutions riches en césium, ce dernier étant fixé sélectivement par les hexacyanoferrates. La stabilité mécanique de ces matériaux est très bonne et ils peuvent être utilisés sur une grande gamme de pH.

Néanmoins, la présence d'un polymère organique en grande quantité, puisqu'il recouvre l'ensemble du support inorganique, pose d'une part le problème de la radiolyse après la fixation du césium et d'autre part le problème d'exutoire.

Il se pose, en effet, le problème de savoir quel sera le sort de ce matériau après extraction, car si on l'envoie à la vitrification, la présence organique en quantité importante est un problème pour la conduite du procédé de vitrification actuel.

Les auteurs affirment que ces matériaux peuvent être vitrifiés. Mais, lors de la vitrification, la présence en fortes quantités de polymère peut créer des problèmes, tandis les hautes températures mises en oeuvre lors de cette étape de vitrification peuvent entraîner la volatilisation du césium.

En d'autres termes, le procédé décrit dans les documents de Loos-Neskovic et al. utilise plusieurs composés organiques qui sont d'une part le polymère « échangeur d'anions » et éventuellement un composé réticulant. La présence en quantité non négligeable de ces composés organiques est problématique pour le traitement et le conditionnement des déchets ainsi créés. En effet d'une part, il peut y avoir un dégagement d'hydrogène par radiolyse de ces composés, et d'autre part, la vitrification directe éventuelle de ces matériaux, si elle permet d'éliminer ces polymères par décomposition, génère un dégagement de gaz qui peut également entraîner le Cs confiné au sein du support.

Très récemment, il a été proposé dans le document de Chin Yuang Chang et *al.* [14] d'utiliser des supports de silice mésoporeuse fonctionnalisée pour venir y insérer des multicouches de nickel-hexacyanoferrate de potassium (NiHCF = $K_2NiFe(CN)_6$) par adsorption successive de $Ni^{2+}$ et de $Fe(CN)_6^{4-}$. Le support de silice fonctionnalisé est une silice fonctionnalisée avec du propyl-éthylènediamine triacétate (PEDTAFS). En effet, le propyl-éthylènediamine triacétate (PEDTA) peut chélater le Ni(II) et sert ainsi de point d'ancrage pour la croissance de multicouches de NiHCF. Pour préparer ce matériau, NiHCF est synthétisé au sein d'une poudre de PEDTAFS en immergeant d'abord cette poudre dans une solution de $Ni(NO)_3$. Puis, après filtration et rinçage, la poudre est ensuite immergée dans une solution de $K_4$ $(Fe(CN)_6)$, puis à nouveau filtrée et rincée. Ces étapes sont répétées plusieurs fois, à savoir 5 fois. Des essais de sorption du césium sont réalisés en « batch ». Des Kd supérieurs à $10^6$ ml/g sont obtenus, pour une solution à 100 ppm environ de Cs sous forme de nitrate et en présence d'autres ions, à savoir $KNO_3$ et/ou $NaNO_3$ jusqu'à 3,0 M. Mais il faut aussi tenir compte du fait que la silice poreuse fonctionnalisée adsorbe également le Cs.

La vitrification des matériaux décrits dans ce document, après fixation des polluants tels que le césium, est susceptible de causer de nombreux problèmes liés notamment à la volatilisation et à la libération du polluant tel que le césium, lors de cette étape de vitrification, du fait des températures très élevées mises en oeuvre.

D'autres voies de synthèse de matériaux composites ont été également étudiées. Ainsi, le document de Lin et Cui [15] décrit-il des nanocomposites organiques-inorganiques pour le traitement des effluents radioactifs. Ils utilisent une approche électrochimique pour synthétiser ces matériaux composés d'un film mince de polyaniline conducteur et de nanoparticules d'hexacyanoferrates de nickel déposés sur une matrice de nanotubes de carbone. Ce matériau est destiné à être utilisé dans un procédé de décontamination par échange ionique assisté par électrochimie.

Ces matériaux ne peuvent pas être utilisés dans un procédé en colonne et le traitement, l'exutoire de ces matériaux très riches en carbone après fixation, extraction du polluant est difficile.

Le document de Folch B. et al. [16] décrit la synthèse de nanoparticules à taille contrôlée de polymères de coordination à ligands CN (en anglais : « Cyano-bridged coordination polymer nanoparticles ») comprenant des « briques » hexa- et octamétallates à l'intérieur de silices mésoporeuses hybrides, plus précisément de silices hexagonales mésostructurées hybrides de type SBA-15 et MCM-41 contenant des fonctionnalités - $(CH_2)_2C_5H_4N$.

L'utilisation du matériau composite obtenu pour la fixation de cations n'est pas décrite. En outre, les silices mésoporeuses présentent une résistance mécanique très insuffisante qui interdit leur mise en oeuvre en colonne.

Il apparaît qu'il existe donc, au vu de ce qui précède, un besoin pour un matériau solide composite fixant des polluants minéraux à base d'hexacyanoferrates de métaux, ou plus généralement de cyanométallates de métaux qui, notamment dans le cas où ces polluants minéraux sont des composés radioactifs tels que le césium, puisse être aisément traité, conditionné, stocké, en un nombre limité d'étapes, après la fixation de ces polluants minéraux sans risque de volatilisation, libération de ces polluants. Il existe encore un besoin pour un matériau qui garde ces polluants minéraux immobilisés, liés, après leur fixation et qui ne libère, relargue pas de nouveau ces polluants minéraux immobilisés quel(s) que soit(soient) le ou les traitements subi(s) par le matériau solide composite à l'issue de la fixation.

Ce matériau doit, en outre, être chimiquement et mécaniquement stable, afin de pouvoir être ainsi conditionné en colonne pour permettre une mise en oeuvre en continu.

Ce matériau solide composite fixant des polluants minéraux doit également avoir d'excellentes propriétés de fixation, en particulier de décontamination.

Il serait d'autre part souhaitable de disposer d'un matériau solide fixant des polluants minéraux associant une bonne stabilité mécanique à une vitesse de réaction élevée à l'opposé des produits sous forme compacte dont la faible surface spécifique conduit à des vitesses de réaction lentes.

Autrement dit, il existe un besoin pour un matériau solide fixant des polluants minéraux, à base d'hexacyanoferrates de métaux, ou plus généralement de cyanométallates de métaux, qui présente entre autres des stabilités mécaniques et chimiques excellentes, un fort coefficient d'affinité ou de décontamination, une grande réactivité, ainsi qu'une bonne sélectivité et qui puisse être facilement traité après fixation des polluants sans que ceux-ci ne soient libérés, ou volatilisés.

Ces propriétés doivent être obtenues avec une quantité minimale de fixateur minéral de type hexacyanoferrates de métal, en tous cas une quantité nettement inférieure à celle des fixateurs minéraux composites de l'art antérieur.

Enfin, il existe un besoin pour un matériau présentant une composition et des propriétés parfaitement reproductibles et contrôlées, et pour un procédé fiable permettant de préparer un tel matériau.

La présente invention a donc pour but de fournir un matériau solide composite fixant des polluants minéraux à base d'hexacyanoferrates de métaux, ou plus généralement de cyanométallates de métaux, qui ne présente pas les inconvénients, défauts, limitations et désavantages des matériaux solides composites fixant des polluants minéraux de l'art antérieur, qui surmonte les problèmes des matériaux de l'art antérieur et qui remplisse, entre autres, l'ensemble des besoins et exigences mentionnés plus haut.

## EXPOSÉ DE L'INVENTION

Ce but, et d'autres encore, sont atteints, conformément à l'invention, par un matériau solide nanocomposite comprenant des nanoparticules d'un polymère de coordination métallique à ligands CN comprenant des cations $M^{n+}$, où M est un métal de transition, et n est 2 ou 3 ; et des anions $[M'(CN)_m]^{x-}$, où M' est un métal de transition, x est 3 ou 4, et m est 6 ou 8 ; lesdits cations $M^{n+}$ du polymère de coordination étant liés par une liaison organométallique à un groupe organique d'un greffon organique fixé chimiquement à l'intérieur des pores d'un support en verre poreux, et les pores du verre poreux étant obtenus par attaque chimique sélective de la phase boratée d'un verre borosilicaté massif dont la composition se situe dans la zone de démixtion du diagramme de phase $SiO_2\text{-}Na_2O\text{-}B_2O_3$.

Avantageusement, $M^{n+}$ peut être $Fe^{2+}$, $Ni^{2+}$, $Fe^{3+}$ ou $Co^{2+}$.

Avantageusement, M' est $Fe^{2+}$ ou $Fe^{3+}$ ou $Co^{3+}$ et m est 6 ; ou bien M' est $Mo^{5+}$ et m est 8.

Avantageusement, les anions $[M'(CN)_m]^{x-}$ peuvent être des anions $[Fe(CN)6]^{3-}$, $[Fe(CN)_6]^4$, $[Co(CN)6]^{3-}$ ou $[Mo(CN)_8]^{3-}$.

Avantageusement, les cations peuvent être des cations $Ni^{2+}$, $Fe^{2+}$ ou $Fe^{3+}$ et les anions sont des anions $[Fe(CN)_6]^{3-}$ ou $[Fe(CN)_6]^{4-}$.

Avantageusement, les cations peuvent être des cations $Fe^{3+}$ et les anions peuvent être des anions $[Mo(CN)_8]^3$.

Avantageusement, les cations peuvent être des cations $Co^{2+}$ ou $Ni^{2+}$ et les anions peuvent être des anions $[Co(CN)_6]^{3-}$.

Avantageusement, les nanoparticules ont une forme de sphère ou de sphéroïde.

Les nanoparticules ont généralement une taille, telle qu'un diamètre, de 3 nm à 30 nm.

Il est à noter que les nanoparticules du polymère de coordination ont généralement une taille et une forme uniformes dans tout le support.

Avantageusement, le groupe organique peut être choisi parmi les groupes azotés tels que la pyridine et les amines ; et les groupes oxygénés tels que les acétylacétonates, et les carboxylates.

Avantageusement, le support peut se présenter sous la forme de particules telles que des billes, de fibres, de tubes, ou de plaques.

Avantageusement, le support peut se présenter sous la forme de particules telles que des billes, et peut avoir une granulométrie de 10 à 500 $\mu$m.

Avantageusement, le support peut avoir une surface spécifique de 10 à 500 $m^2/g$. Il s'agit là généralement de la surface spécifique BET.

Avantageusement, la porosité du support poreux est de 25 à 50% en volume. Cette porosité est généralement mesurée par adsorption d'azote.

Avantageusement, le support peut présenter un ou plusieurs types de tailles de pores, choisi(s) parmi une microporosité, une mésoporosité et une macroporosité.

Avantageusement, le support peut avoir une taille moyenne des pores de 2 à 120 nm, par exemple de 2 à 20 nm.

Avantageusement, les pores du support sont définis par des parois, murs, dont l'épaisseur est de 10 à 60 nm.

Le matériau selon l'invention présente une structure et une composition spécifique et peut être défini comme un matériau solide nanocomposite comprenant des nanoparticules d'un polymère de coordination métallique à ligands CN, lesdites nanoparticules étant liées par une liaison organométallique à un groupe organique d'un greffon organique fixé chimiquement à l'intérieur des pores d'un support en verre poreux.

En d'autres termes, le matériau selon l'invention comprend des nanoparticules d'un polymère de coordination à ligands CN (« cyano-bridged coordination polymer nanoparticles ») à base de « briques » (« building blocks »), motifs, mailles, cyanométallates de métal telles que hexa et octacyanométallates de métaux qui sont fixées, liées à un groupe organique d'un greffon, ledit greffon étant immobilisé, fixé chimiquement, généralement par covalence, à l'intérieur des pores d'une matrice en verre poreux.

On peut dire que le matériau selon l'invention est un matériau préparé par la croissance à l'intérieur des pores du support, de réseaux à ligands cyano (« cyano-bridged network ») en des points spécifiques de celui-ci, cette croissance étant réalisée par coordination successive de $M^{n+}$ puis de $[M'(CN)_m]^{x-}$, éventuellement répétée.

On peut encore dire que le polymère est un polymère de $M^{n+}/[M'(CN)_m]^{x-}$.

Le polymère est un polymère dit « de coordination » car il établit une liaison entre les cations $M^{n+}$, par exemple $M^{2+}$, et par exemple, les cations $M'^{3+}$, par l'intermédiaire des ligands CN : $M^{2+}\text{-CN-}M'^{3+}$.

Le rapport atomique M/M' est généralement voisin de 1.

Par « fixé chimiquement », on entend généralement que le greffon est lié, fixé par une liaison covalente à la surface de la paroi des pores.

Le groupe organique que l'on peut décrire comme un groupe fonctionnel d'ancrage des nanoparticules est un groupe apte à former une liaison organométallique avec le cation $M^{n+}$, tel qu'un groupe pyridine.

Le greffon comprend généralement un groupe de liaison tel qu'un groupe alkylène linéaire de 2 à 6 atomes de carbone comme un groupe $-(CH_2)_2-$ qui relie ledit groupe organique, aussi appelé groupe fonctionnel d'ancrage, à un groupe assurant l'accrochage chimique, généralement par covalence du greffon à la surface des pores du support en verre. Dans le cas d'un verre dont la surface est essentiellement constituée par de la silice, ce groupe assurant l'accrochage covalent du greffon est, par exemple, un groupe SiO lié aux groupes silanols de la surface du verre.

Selon l'invention, le cyanométallate de métal tel qu'un hexacyanoferrate de métal de transition est obtenu par cristallisations successives et il est lié par une liaison organométallique forte au groupe organique ou groupe fonctionnel d'ancrage du greffon ; il adhère alors parfaitement au support en verre par l'intermédiaire du greffon fixé chimiquement, fortement, par covalence à ce support.

Le matériau selon l'invention se différencie notamment du matériau décrit dans le document de Folch. B et *al*. [16] en ce que le support est en verre poreux et non en une silice mésoporeuse.

L'homme du métier sait qu'un support en verre poreux est totalement différent d'un support en silice mésoporeuse et identifie immédiatement les différences qui peuvent exister entre le support en verre poreux du matériau selon l'invention et un support en silice mésoporeuse, tel que celui qui est mentionné dans le document [16].

Un support défini comme étant un support en verre poreux ne peut en aucun cas inclure les supports en silice mésoporeuse.

En effet, les procédés de synthèse d'un verre poreux d'une part et d'une silice mésoporeuse d'autre part sont clairement et totalement différents.

Ensuite, comme on l'expose de manière plus détaillée ci-dessous, la nature de la porosité d'un support en verre poreux et d'un support en silice mésoporeuse est très différente.

Une différence essentielle entre un verre poreux et une silice mésoporeuse est le fait que le verre poreux peut être facilement façonné à la forme que l'on souhaite, quelle que soit cette forme, alors que ce n'est absolument pas possible pour la silice mésoporeuse. Le verre mésoporeux peut donc être mis à volonté sous la forme de supports présentant toutes sortes de géométries et/ou de tailles et qui peuvent s'adapter à toutes sortes d'utilisations. Toutes ces propriétés avantageuses dues au support en verre poreux sont bien sûr communiquées au matériau selon l'invention comprenant ce support en verre poreux.

Ainsi, le matériau selon l'invention, du fait qu'il comporte un support en verre poreux possède une résistance mécanique nettement supérieure qui permet son utilisation en colonne, ce qui n'est pas possible avec le matériau du document [16].

En effet, le support en verre poreux du matériau selon l'invention présente généralement des parois, murs, d'épaisseurs importantes, par exemple de 10 à 60 nm, telles que définies plus haut ; il peut donc avantageusement être défini comme un matériau qui présente une résistance mécanique élevée et qui peut donc être mis sous la forme de billes pour une utilisation en colonne, au contraire des silices obtenues par voie sol-gel du document de Folch [16] qui ont des parois, murs, de faible épaisseur, par exemple de 2 à 3 nm.

En outre, le matériau selon l'invention présente généralement une porosité non organisée en ce sens que plusieurs types de tailles de pores peuvent être présents simultanément, alors que dans le matériau du document [16], le support en silice présente une porosité bien organisé avec des tailles de pores toujours inférieures à 10 nm.

Une telle porosité non organisée serait a priori plus avantageuse pour la diffusion des ions de polluant au sein de la porosité lors de la sorption, notamment du fait de la présence de quelques macropores.

En conséquence, cette porosité non organisée augmenterait la cinétique.

Le matériau selon l'invention ne présente pas les inconvénients des matériaux de l'art antérieur, satisfait aux exigences énumérées plus haut, et apporte une solution aux problèmes posés par les matériaux de l'art antérieur.

Ainsi, il n'existe pas, dans le matériau selon l'invention, de cyanométallate de métal tel qu'un hexacyanoferrate de métal de transition libre au sein de la porosité qui pourrait être relargué lors du traitement d'une solution en vue d'en éliminer les polluants minéraux.

Une des propriétés les plus importantes du matériau selon l'invention, qui est totalement étonnante au regard de l'art antérieur, est que, après sorption d'un polluant minéral, tel que du césium radioactif, au sein des nanoparticules de polymère, lui-même lié à un greffon organique fixé chimiquement à la surface des pores du support, la porosité du matériau selon l'invention peut être facilement fermée sans que cela n'occasionne une quelconque libération, volatilisation du polluant tel que du césium. La fermeture de la porosité, du fait notamment que le support est en un verre poreux, choisi de préférence pour son aptitude à voir sa porosité facilement fermée dans des conditions « douces », et non en silice, peut en effet être réalisée par un traitement dans des conditions « douces », par exemple par un traitement thermique à basse température ou par un traitement radiatif, ou encore par un traitement chimique, de préférence dans une atmosphère basique, par exemple une atmosphère ammoniaquée, sans risque de libération, notamment de volatilisation du polluant minéral, par exemple du césium.

Le fait de pouvoir refermer facilement la porosité du verre par un traitement tel que décrit plus haut, par exemple par un traitement de chauffage est l'un des avantages fondamentaux du procédé selon l'invention. Dans le cas d'un matériau comprenant un support en silice mésoporeuse tel que le matériau décrit dans le document [16], il n'est pas possible de refermer la porosité du moins pas aussi facilement.

Une- fois la porosité fermée, le matériau selon l'invention peut être utilisé directement comme matrice de confinement, ce qui était impossible avec les matériaux de l'art antérieur comme le matériau du document [16].

Ainsi, le matériau selon l'invention comprend généralement une quantité de cyanométallate de métal, par exemple d'hexacyanoferrate de métal fixé de 1 à 10 % en poids, de préférence de 2 à 3% en poids par rapport à la masse du support, cette valeur est à rapprocher de la valeur de 30% pour les hexacyanoferrates imprégnés sur silice de l'art antérieur.

L'invention concerne, en outre, un procédé de préparation du matériau décrit plus haut dans lequel on réalise les étapes successives suivantes :

a) on prépare un support en verre poreux par attaque chimique sélective de la phase boratée d'un verre de borosilicate de sodium massif dont la composition se situe dans la zone de démixtion du diagramme de phase $SiO_2$-$Na_2O$-$B_2O_3$ ;

b) on réalise la fixation chimique du greffon organique à l'intérieur des pores du support en verre poreux ;

c) on met en contact le support en verre poreux à l'intérieur des pores duquel est fixé le greffon organique avec une solution contenant l'ion $M^{n+}$, puis on lave une ou plusieurs fois et on sèche le support ainsi obtenu ;

d) on met en contact le support en verre poreux obtenu à l'issue de l'étape c) avec une solution d'un complexe de $[M'(CN)_m]^{x-}$, puis on lave une ou plusieurs fois et on sèche le support ainsi obtenu ;

e) on lave une ou plusieurs fois le support en verre poreux obtenu à l'issue de l'étape d), puis on le sèche ;

f) on répète éventuellement les étapes c) à e).

Avantageusement, préalablement à l'attaque chimique, le verre de borosilicate de sodium massif peut être traité thermiquement.

Avantageusement, l'attaque chimique peut comprendre une attaque par une solution acide, telle qu'une solution d'acide chlorhydrique, suivie éventuellement par une attaque par une solution basique, telle qu'une solution de soude.

Avantageusement, le greffon organique peut être la pyridine, et la fixation chimique du greffon organique à l'intérieur des pores du support en verre poreux peut être réalisée en mettant en contact le support en verre poreux avec une solution, telle qu'une solution dans le méthanol, de $(CH_3O) Si(CH_2)_2C_5H_4N$.

Avantageusement, la solution contenant l'ion $M^{n+}$ peut être une solution, telle qu'une solution dans le méthanol, de $[M(H_2O)_5]Cl_2$ ou $[M(H_2O)_6]Cl_3$.

Avantageusement, le complexe de $[M'(CN)_m]^{x-}$ répond à la formule suivante :

$$(Cat)_x[M'(CN)_m],$$

où M', m, et x ont la signification déjà donnée plus haut, et Cat est un cation choisi généralement parmi les cations de métaux alcalins tels que K ou Na, les ammoniums quaternaires tels que le tétrabutylammonium (« TBA »), et les phosphoniums tels que le tétraphénylphosphonium (« $PPh_4$ »).

Avantageusement, les étapes c) à e) peuvent être répétées de 1 à 4 fois.

En résumé, ce procédé, est simple, fait appel à des processus connus et éprouvés, est fiable et parfaitement reproductible, c'est-à-dire qu'il permet la préparation d'un produit final dont les caractéristiques, la composition, et les propriétés, sont parfaitement déterminées, et ne subissent pas de variations aléatoires.

L'invention concerne également un procédé de fixation d'au moins un polluant minéral contenu dans une solution, dans lequel on met en contact ladite solution avec le matériau solide nanocomposite tel que décrit plus haut, moyennant quoi le polluant minéral est immobilisé à l'intérieur des pores du matériau solide.

Avantageusement, ladite solution peut être une solution aqueuse.

Ladite solution peut être un liquide de procédé ou un effluent industriel.

Avantageusement, ladite solution peut être choisie parmi les liquides et effluents issus de l'industrie et des installations nucléaires et des activités mettant en oeuvre des radionucléides.

Avantageusement, le procédé peut être réalisé en continu.

Avantageusement, le matériau solide composite fixant des polluants minéraux peut être conditionné en colonne.

Généralement, ledit polluant peut être présent à une concentration de 0,1 picogramme à 100 mg/L.

Ledit polluant peut être issu d'un métal ou d'un isotope radioactif dudit métal.

Ledit polluant peut être choisi parmi les complexes anioniques, les colloïdes et les cations.

Ledit polluant peut être notamment un élément choisi parmi Cs, Co, Ag, Ru, Fe et Tl et les isotopes de ceux-ci.

Avantageusement, à l'issue de la mise en contact, le matériau solide dans les pores duquel le polluant minéral est immobilisé est soumis à un traitement pour en fermer les pores.

Avantageusement, le traitement pour fermer les pores est un traitement thermique réalisé à une température inférieure à 1000 °C, par exemple de 600 à 850°C pendant une durée, par exemple, de 5 à 30 minutes ; ou un traitement radiatif généralement de faible énergie, réalisé par exemple par bombardement avec des ions Kr ou Ar ou Xe, par exemple dans les conditions suivantes : 70 MeV Ar ou 250 MeV Kr, avec une fluence de $2x10^{10}$ à $10x10^{10}$ ions/cm2.s ; ou encore un traitement chimique généralement réalisé dans une atmosphère basique, comme par exemple une atmosphère ammoniaquée, réalisé généralement à température ambiante, pendant une durée, par exemple de 1 à 12 heures.

Ce procédé de fixation possède tous les avantages intrinsèquement liés au matériau solide selon l'invention, mis en oeuvre dans ce procédé, et qui ont déjà été décrits plus haut.

## BRÈVE DESCRIPTION DES DESSINS

- La figure 1 montre le diagramme de phase $SiO_2$-$Na_2O$-$B_2O_3$ et les zones de démixtion de ce diagramme.
- La figure 2 est un graphique qui représente le volume d'azote $V_0$ adsorbé (en $cm^3$/g) en fonction de $P/P_0$ où P est la pression partielle d'azoté et $P_0$ est la pression maximale adsorbée, lors de la mesure de la porosité par un appareil BET.

L'échelle des ordonnées de droite concerne les mesures représentées par des □.

L'échelle des ordonnées à gauche concerne les mesures représentées par des ■, des ○ et des ●.

Les échantillons sont des échantillons de verre poreux préparés à partir de la composition de l'exemple 1 qui a subi des traitements thermiques (« TT ») et des attaques chimiques (« TC »)dans des conditions différentes.

Les mesures représentées par des ■ ont été réalisées sur un échantillon qui n'a pas subi de traitement thermique et qui a subi une attaque chimique par du HCl 0,5M pendant 6 heures à 90°C.

Les mesures représentées par des ○ ont été réalisées sur un échantillon qui n'a pas subi de traitement thermique, et qui a subi une attaque chimique par du HCl 0,5M pendant 24 heures à 90°C.

Les mesures représentées par des ● ont été réalisées sur un échantillon qui a subi un traitement thermique pendant 24 heures à 540°C, et qui a subi une attaque chimique par du HCl 0,5M pendant 6 heures à 90°C.

Les mesures représentées par des □ ont été réalisées sur un échantillon qui n'a pas subi de traitement thermique et qui a subi une attaque chimique par du HCl 0,5M pendant 6 heures à 90°C suivie d'une attaque chimique par du NaOH 1M pendant une heure à température ambiante.

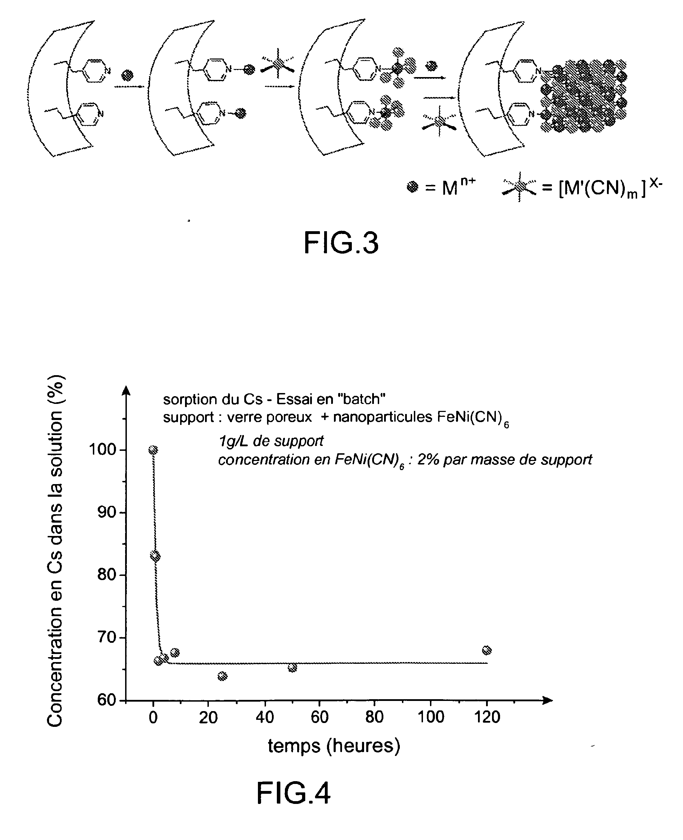

- La figure 3 est une représentation schématique du procédé selon l'invention réalisé avec des greffons - $(CH_2)_2C_5H_4N$.
- La figure 4 est un graphique qui présente les essais de cinétique de sorption du Cs en « batch » réalisés avec le matériau de l'exemple 2, à savoir un matériau nanocomposite avec un support en verre poreux et des nanoparticules de $FeNi(CN)_6$. La concentration en $FeNi(CN)_6$ est de 2 % par rapport à la masse de support et on utilise 1 g de matériau/L de solution.

En ordonnée est portée la concentration en Cs dans la solution (en % par rapport à la concentration initiale) et en abscisse est porté le temps (heures).

## EXPOSÉ DÉTAILLÉ DE MODES DE RÉALISATION PARTICULIERS

L'invention va maintenant être décrite plus en détail dans ce qui suit en faisant en particulier référence au procédé de préparation.

La première étape de ce procédé consiste en la préparation d'un support en verre poreux.

Précisons tout d'abord que le terme « poreux » tel qu'il est utilisé dans la présente en relation avec le support, signifie que ce support contient des pores ou vides.

En conséquence, la densité de ce support poreux est inférieure à la densité théorique du support non poreux qui est qualifié de matériau massif.

Les pores peuvent être reliés ou isolés mais dans le support poreux selon l'invention, la majorité des pores sont reliés, en communication. On parle alors de porosité ouverte ou de pores interconnectés.

Généralement, dans le support en verre poreux de l'invention, les pores sont des pores percolants qui relient une première surface dudit support à une seconde surface principale dudit support.

Au sens de l'invention, un support est généralement considéré comme poreux lorsque sa densité est au-plus d'environ 95% de sa densité théorique.

De préférence, ce support en verre poreux est un support qui est préparé par attaque chimique d'un verre de borosilicate de sodium massif de départ dont la composition se situe dans la zone de démixtion du diagramme de phase $SiO_2$-$Na_2O$-$B_2O_3$.

Cette composition est donnée dans toutes les tables thermodynamiques de verres et peut donc être très facilement et très rapidement déterminée par l'homme du métier.

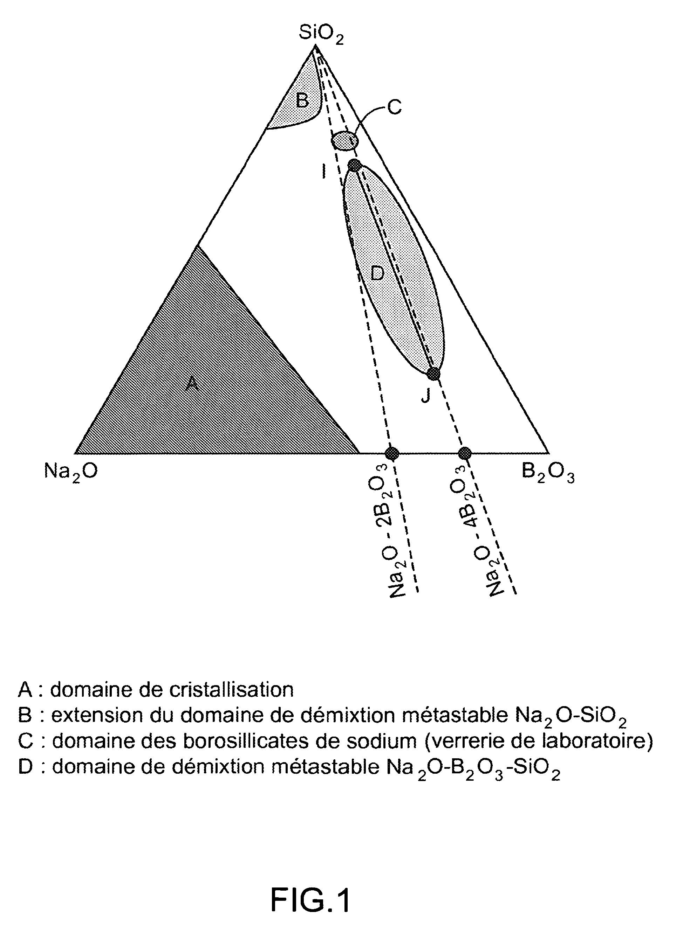

On pourra se référer par exemple au schéma de la Figure 1, extrait des Techniques de l'ingénieur, 10 juillet 2001, partie Verres AF3600, rédigée par Jean PHALIPPOU.

Sur ce schéma, les zones de démixtion sont les zones B et D et on se place selon l'invention de préférence dans la zone D.

Par « verre massif », on entend que ce verre de départ ne présente pas ou quasiment pas de porosité et que cette porosité est précisément créée par l'attaque chimique.

L'élaboration de ce verre est généralement réalisée en pesant tout d'abord des poudres d'oxydes ou de précurseurs d'oxydes tels que des carbonates dans les proportions voulues qui permettront d'obtenir un verre ayant la composition recherchée, se situant dans le cas d'un verre borosilicaté dans la zone de démixtion du diagramme de phase $SiO_2$-$Na_2O$-$B_2O_3$. La composition du verre est également généralement choisie de façon que la porosité du substrat en verre poreux puisse être facilement fermée sans que ses propriétés chimiques et mécaniques soient affectées et sans mettre en oeuvre de températures élevées.

Ces poudres sont ensuite intimement mélangées, et le mélange des poudres est placé dans un creuset par exemple en platine rhodié, qui est disposé dans un dispositif de chauffage adéquat tel qu'un four à moufle.

La fusion du mélange de poudres pour donner du verre fondu est généralement réalisée à une température dite température d'élaboration du verre qui se situe généralement dans la plage de 1300°C à 1550°C. Cette température d'élaboration est généralement atteinte en effectuant plusieurs rampes de montées en température depuis la température ambiante, et en observant des paliers de température de durée variable entre ces rampes. Le palier final à la température d'élaboration, par exemple de 1480°C, peut avoir une durée de 1 à 4 heures, par exemple de 2 heures.

Généralement, le verre fondu est ensuite coulé par exemple sur une plaque, refroidi jusqu'à sa solidification, puis concassé. Les morceaux de verre concassés sont ensuite placés de nouveau dans le creuset et fondus de nouveau en les portant à la température d'élaboration définie plus haut. Généralement, on introduit directement le creuset contenant les morceaux de verre concassés directement dans le four déjà porté à la température d'élaboration et on maintient cette température, par exemple de 1480°C, pendant une durée suffisante, généralement de 10 à 60 minutes, par exemple 30 minutes, pour que le verre en fusion soit homogène.

Le verre fondu est ensuite de nouveau coulé, par exemple sur une plaque, ou alors coulé dans un moule si l'on souhaite une forme spécifique, puis refroidi jusqu'à sa solidification.

Eventuellement, lorsque le verre a été coulé sur une plaque, on peut ensuite le mettre sous la forme voulue, par exemple, le verre peut être de nouveau concassé et éventuellement broyé plus finement par exemple à l'aide d'un vibrobroyeur si l'on souhaite préparer une poudre de granulométrie plus fine.

Le support en verre peut revêtir toutes sortes de formes.

Le support peut ainsi se présenter sous la forme de particules telles que des sphères (billes), des fibres, des tubes, ou des plaques.

La taille du support peut également varier entre de larges limites.

Avantageusement, le support peut se présenter sous la forme de particules formant une poudre et peut avoir une granulométrie (taille de particules) de 10 à 500 $\mu$m. La taille des particules est définie par leur plus grande dimension qui est leur diamètre dans le cas de sphères ou de sphéroïdes.

Le procédé d'élaboration du verre, décrit ci-dessus peut être facilement adapté selon la forme et/ou la taille du support en verre que l'on souhaite préparer.

Suite à l'élaboration du verre et préalablement à l'attaque chimique, le verre peut éventuellement subir un ou plusieurs traitement(s) thermique(s) de températures et de durées variables.

Ce ou ces traitement(s) thermique(s) peut(peuvent) être réalisé(s) avant et/ou après concassage. Ainsi, si l'on souhaite garder l'intégrité de la forme du verre, on réalise le ou les traitement(s) thermique(s) avant concassage sinon on le (s) réalise après ce concassage, les temps de traitement(s) thermique(s) sont alors différents. Il est également possible de réaliser un ou plusieurs traitement(s) thermique(s) avant concassage, et un ou plusieurs traitement(s) thermique(s) après concassage.

Ce ou ces traitement(s) thermique(s) a(ont) pour but de faire grossir les zones boratées et donc de faire varier la taille et la morphologie des pores dans le verre poreux final.

Ce (s) traitement(s) thermique(s) est (sont) généralement réalisé(s) à une température qui est la température de croissance des zones démixées et qui se situe généralement entre la température de transition vitreuse (Tg) et la température de transition vitreuse +350°C au maximum. La(les) durée(s) de ce(s) traitement(s) thermique(s) est(sont) très variable(s) et peut(peuvent) aller jusqu'à plusieurs jours selon la température de traitement.

Ainsi le(s) traitement(s) thermique(s) peut(peuvent) être réalisé(s) à une température entre Tg et Tg +350°C pendant une durée de 6 à 96 heures.

Après ce(s) traitement(s) thermique(s) éventuel(s), on réalise l'attaque chimique qui est nécessaire pour obtenir la porosité au sein du verre.

L'attaque chimique comprend généralement une attaque par une solution acide, telle qu'une solution d'acide chlorhydrique, par exemple à une concentration de 0,5 mol/L, suivie éventuellement par une attaque par une solution basique, telle qu'une solution de soude par exemple à une concentration de 1 mol/L.

L'attaque acide a généralement une durée de 2 à 48 heures, par exemple de 6 heures à 24 heures, et est généralement réalisée à une température de 50 à 120°C, par exemple de 90°C.

L'attaque basique optionnelle a généralement une durée de 1 à 3 heures, par exemple de 1 heure, et est généralement réalisée à une température ambiante.

Généralement, le support poreux ainsi élaboré est lavé, par exemple à l'eau ultra-pure, une ou plusieurs fois, puis séché par exemple à l'étuve à une température de 120°C pendant 24 heures.

Le support peut avoir une surface spécifique de 10 à 500 $m^2$/g de préférence de 50 à 150 $m^2$/g mesurée par BET.

La porosité du support peut également varier dans de larges limites, généralement de 25 à 50%.

Le support préparé par le procédé selon l'invention peut ne présenter qu'un seul type de porosité, par exemple une microporosité, une mésoporosité ou une macroporosité.

Ou bien, le support préparé par le procédé selon l'invention peut présenter simultanément plusieurs types de porosités choisis par exemple parmi une microporosité (taille des pores, par exemple diamètre, généralement inférieure à 2 nm), une mésoporosité (taille des portes, par exemple diamètre, de 2 à 20 nm), et une macroporosité (taille des pores, par exemple diamètre supérieur à 20 nm, par exemple jusqu'à 100 nm).

La taille moyenne des pores, qui est leur diamètre moyen dans le cas de pores à section circulaire, va généralement de 2 à 120 nm.

On peut faire varier la porosité et la taille des pores et parfaitement la contrôler en modifiant les conditions des traitements thermiques éventuels et de la ou des attaque(s) chimique(s).

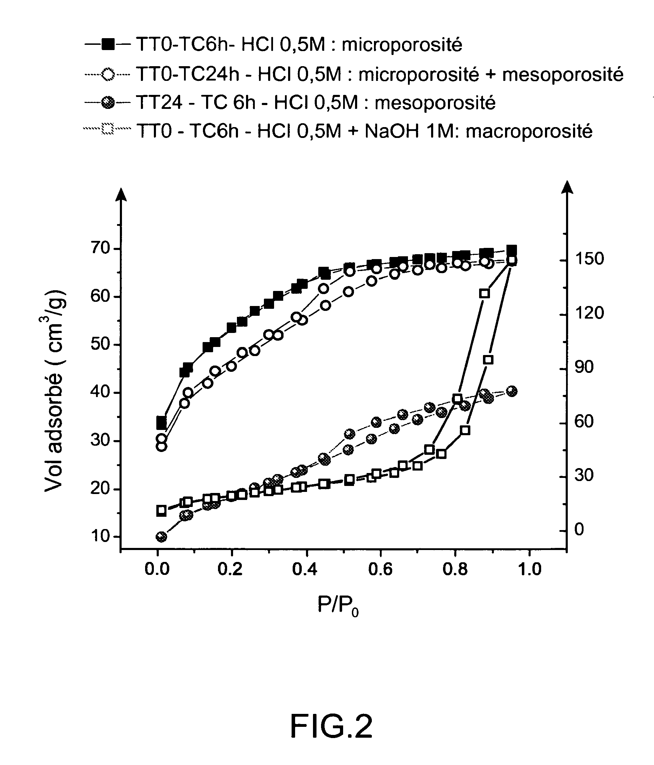

- Ainsi, comme on le montre sur la figure 2, les conditions de traitement thermique et d'attaque chimique peuvent conduire à des porosités très différentes.

On observe ainsi :

- une microporosité par exemple pour un échantillon sans traitement thermique et ayant subi une attaque de 6 heures dans HCl à 0,5M à 90°C (Surface spécifique de 164 $m^2$/g).
- une microporosité et une mésoporosité par exemple pour un échantillon sans traitement thermique et ayant subi une attaque de 24 heures dans HCl à 0,5M à 90°C (surface spécifique de 146 $m^2$/g).
- une mésoporosité par exemple pour un échantillon avec un traitement thermique de 24 heures à 540°C puis une attaque chimique de 6 heures dans HCl à 0,5M à 90°C (échantillon de l'exemple 1, surface spécifique de 65 $m^2$/g)
- une macroporosité par exemple pour un échantillon sans traitement thermique avec une attaque chimique de 6 heures dans HCl à 0,5M à 90°C suivie d'une attaque basique dans NaOH 1M pendant 1 heure à température ambiante (surface spécifique de 69 $m^2$/g).

Le support en verre poreux selon l'invention a des parois de pores que l'on peut qualifier de « épaisses », à savoir généralement d'une épaisseur de 10 à 60 nm, ce qui est beaucoup plus élevé que les parois, murs, des pores des silices mésoporeuses du document [16] (2 à 3 nm) et accroît grandement la résistance mécanique.

Les étapes qui vont maintenant être décrites pour la fixation chimique du greffon organique et la préparation des nanoparticules d'un polymère de coordination à ligands CN liés à ces greffons à l'intérieur des pores du support sont sensiblement analogues à celles du procédé décrit dans le document de Folch et *al*. [16] à la différence toutefois que dans ce document, le support poreux est en silice mésoporeuse et non en verre. On pourra donc se référer à ce document pour ce qui concerne notamment les réactifs et conditions opératoires mis en oeuvre dans ces étapes mais aussi pour la description des nanoparticules et de leur attachement à la surface des pores par l'intermédiaire du greffon.

On réalise ensuite la fixation chimique du greffon organique à l'intérieur des pores du support en verre poreux. Cette étape peut aussi être appelée étape de fonctionnalisation (voir figure 3).

Le greffon organique comprend un groupe organique, que l'on peut dénommer groupe fonctionnel d'ancrage des nanoparticules.

Un groupe fonctionnel d'ancrage des nanoparticules est un groupe apte à former une liaison organométallique avec le cation $M^{n+}$

Des exemples de tels groupes organiques ont déjà été cités plus haut. Un groupe organique préféré est la pyridine comme cela est représenté sur la figure 3.

Le groupe organique peut être lié directement au support en verre poreux, mais il est généralement lié, fixé chimiquement à ce support par l'intermédiaire d'un bras, groupe de liaison et d'un groupe d'accrochage fixé, lié chimiquement, généralement par une liaison covalente au support en verre poreux.

Le greffon comprend ainsi généralement un groupe de liaison tel qu'un groupe alkylène linéaire de 2 à 6 atomes de carbone comme un groupe -$(CH_2)_2$- (voir la Figure 3) qui relie ledit groupe organique, aussi appelé groupe fonctionnel d'ancrage, à un groupe assurant l'accrochage covalent du greffon à la surface des pores du support en verre. Dans le cas d'un verre dont la surface est essentiellement constituée par de la silice, ce groupe assurant l'accrochage covalent du greffon est par exemple un groupe SiO lié aux groupes silanols de la surface du verre.

Pour obtenir la fixation du greffon à la surface des parois des pores du support en verre poreux, on met donc en contact ce support avec un composé comprenant ledit groupe fonctionnel d'ancrage, un groupe d'accrochage capable de se lier chimiquement, généralement par covalence, à la surface du verre et éventuellement un groupe de liaison reliant ledit groupe fonctionnel d'ancrage, au groupe d'accrochage qui assure la fixation, généralement par covalence du greffon à la surface des parois des pores.

Ce groupe d'accrochage peut être choisi par exemple parmi les groupes trialcoxysilane qui réagissent avec les groupes silanols qui peuvent être présents à la surface du verre.

Ainsi, dans le cas de la pyridine, on peut mettre en contact le support en verre poreux avec une solution de $(CH_3O)_3Si(CH_2)_2C_5H_4N$ dans un solvant. Un solvant préféré est le toluène. Le solvant est généralement porté à reflux et la durée de la mise en contact est généralement de 12 à 48 heures, par exemple de 24 heures.

A l'issue de cette étape, on obtient donc un support en verre poreux fonctionnalisé par des groupes organiques tels que des groupes pyridines (voir figure 3).

On procède ensuite à la croissance à l'intérieur des pores du support en verre poreux de nanoparticules d'un polymère de coordination métallique à ligands CN.

Cette croissance est réalisée en deux étapes successives, éventuellement répétées.

On commence par mettre en contact le support en verre poreux à l'intérieur des pores duquel est fixé le greffon organique avec une solution contenant l'ion $M^{n+}$ généralement sous la forme d'un sel métallique.

Cette solution est une solution dans un solvant choisi généralement parmi l'eau, les alcools et les mélanges d'eau et d'un ou plusieurs alcools.

Le solvant préféré est le méthanol.

Le sel de métal contenu dans cette solution est un sel dont le métal est généralement choisi parmi les métaux susceptibles de donner un cyanométallate de ce métal, tel qu'un hexacyanoferrate de ce métal, qui soit insoluble.

Ce métal peut être choisi parmi tous les métaux de transition, par exemple parmi le cuivre, le cobalt, le zinc, le cadmium, le nickel et le fer etc.

Le nickel, le fer et le cobalt sont préférés et l'ion $M^{n+}$ pourra donc être choisi parmi $Fe^{2+}$, $Ni^{2+}$, $Fe^{3+}$, et $Co^{2+}$.

Le sel de métal peut être par exemple un nitrate, un sulfate, un chlorure, un acétate, éventuellement hydraté, d'un de ces métaux à une concentration dans la solution de préférence de 0,01 à 1 mol/L, de préférence encore de 0,02 à 0,05 mol/L.

La quantité de sel utilisée est par ailleurs de préférence environ de 0,4 mmol/g de support traité.

Avantageusement, la solution contenant l'ion $M^{n+}$ peut être une solution dans l'eau ou dans un alcool tel que le méthanol, ou une solution dans un mélange d'eau et d'un ou plusieurs alcool(s).

Avantageusement, cette solution contenant l'ion $M^{n+}$ peut être une solution telle qu'une solution dans le méthanol de $[M(H_2O)_6]Cl_2$ où M est de préférence Ni, Fe ou Co, ou de $[M(H_2O)_6]Cl_3$ où M est Fe.

La mise en contact que l'on peut aussi qualifier d'imprégnation du support est effectuée en général à température ambiante, de préférence sous agitation, et sa durée est généralement de 20 à 24 heures

A l'issue de cette mise en contact, on obtient un support solide dans lequel des cations $M^{n+}$ sont liés par une liaison organométallique aux groupes fonctionnels d'ancrage du greffon. Ainsi, dans le cas de la pyridine (voir figure 3) une liaison s'établit entre l'azote du cycle et le cation $M^{n+}$. On sépare ensuite le produit solide obtenu, par exemple sous forme de poudre, par exemple par filtration.

On lave ensuite une ou plusieurs fois, par exemple 1 à 3 fois le produit séparé de préférence avec le même solvant que le solvant de la solution de $M^{n+}$, tel que le méthanol.

Cette opération de lavage permet d'éliminer le sel de métal en excès et d'obtenir un produit stable à la composition parfaitement définie.

On effectue ensuite une étape de séchage généralement à la température ambiante et sous vide pendant une durée de 6 à 48 heures, par exemple de 24 heures. De manière générale, le séchage est poursuivi jusqu'à ce que la masse du support reste sensiblement constante.

On met ensuite en contact le support en verre poreux qui a réagi avec le cation de métal $M^{n+}$ comme décrit ci-dessus avec une solution d'un complexe (que l'on peut éventuellement appeler sel) de $[M'(CN)_m]^{x-}$, par exemple de $[M'(CN)_m]^{3-}$.

Cette solution est une solution dans un solvant choisi parmi l'eau, les alcools et les mélanges d'eau et d'un ou plusieurs alcool(s).

Le solvant préféré est le méthanol.

La mise en contact que l'on peut aussi qualifier d'imprégnation du support est effectuée en général à température ambiante, de préférence sous agitation, et sa durée est généralement de 20 à 48 heures, par exemple 24 heures.

Ce complexe répond généralement à la formule suivante :

(Cat) x [M'(CN) $_m$],

où M', m, et x ont la signification déjà donnée plus haut, et Cat est un cation choisi généralement parmi les cations de métaux alcalins tels que K ou Na, les ammoniums quaternaires tels que le Tétrabutylammonium (« TBA »), et les phosphoniums tels que le tétraphénylphosphonium (« PPh$_4$ »). Des complexes préférés sont les complexes de formule [N(C$_4$H$_9$)$_4$] $_x$ [M'(CN) $_m$].

Des complexes encore préférés sont les complexes de formule [N(C$_4$H$_9$)$_4$]$_3$ [M' (CN) $_m$] tels que [N(C$_4$H$_9$)$_4$]$_3$ [Fe(CN) $_6$], [N(C$_4$H$_9$)$_4$]$_3$ [Mo(CN) $_8$], et [N(C$_4$H$_9$)$_4$]$_3$[Co(CN) $_6$].

La solution par exemple méthanolique de complexe ou de sel mise en oeuvre a une concentration variable, c'est-à-dire que la concentration du sel ou du complexe est généralement de 0,01 à 1 mol/L, de préférence de 0,02 à 0,05 mol/L.

D'autre part, la solution de sel ou de complexe de [M' (CN) $_m$] $^{x-}$ mise en oeuvre est préparée de telle sorte, que le rapport massique du sel ou du complexe à la quantité du support d'imprégnation essentiellement constitué du support en verre poreux initial, soit de préférence de 5 à 20%.

On obtient ainsi la fixation de la partie anionique [M'(CN)$_m$]$^{x-}$ , par exemple [Fe(CN)$_6$]$^{4-}$, du sel ou du complexe sur les cations M$^{n+}$ (voir figure 3), cette fixation se fait par formation de liaisons de type covalente qui sont relativement fortes selon le milieu, et cette fixation est généralement quantitative, c'est-à-dire que tous les cations M$^{n+}$ réagissent. La fixation ne présente donc aucun caractère aléatoire.

A l'issue de cette mise en contact, on sépare le produit solide obtenu, par exemple sous forme de poudre, par exemple par filtration.

On lave ensuite une ou plusieurs fois, par exemple 1 à 3 fois, le produit séparé de préférence avec le même solvant que le solvant de la solution de sel ou de complexe, tel que le méthanol.

Cette opération de lavage a pour but d'éliminer les sels et les complexes de [M'(CN)$_m$]$^{x-}$ qui n'ont pas été fixés sur les cations M$^{n+}$ et permet d'obtenir un matériau nanocomposite fixant des polluants minéraux dans lequel il n'existe plus de [M'(CN)$_m$]$^{x-}$ libre, non lié, pouvant être relargué.

Les étapes de mise contact du support en verre poreux avec le cation de métal M$^{n+}$ puis de mise en contact du support en verre poreux avec une solution d'un sel ou d'un complexe de [M'(CN)$_m$]$^{x-}$, par exemple de [M'(CN)$_m$]$^{3-}$ peuvent n'être effectuées qu'une seule fois, ou bien elles peuvent être répétées de 1 à 4 fois (voir figure 3), on peut ainsi parfaitement régler la taille des nanoparticules.

La teneur pondérale en fixateur minéral, c'est-à-dire en hexacyanoferrate de métal insoluble fixé sur le polymère échangeur d'anions, est généralement de 1 à 10%, par exemple de 3%, par rapport à la masse du support en verre poreux.

Le matériau solide nanocomposite fixant des polluants minéraux selon l'invention, peut être mis en oeuvre notamment, mais non exclusivement, dans un procédé de fixation d'au moins un polluant minéral par exemple d'un cation métallique contenu dans une solution, dans lequel ladite solution est mise en contact avec ledit matériau solide composite fixant des polluants minéraux.

Les matériaux selon l'invention, du fait de leurs excellentes propriétés telles qu'une excellente capacité d'échange, une excellente sélectivité, une vitesse de réaction élevée, conviennent particulièrement à un tel usage.

Cette excellente efficacité est obtenue avec des quantités réduites de fixateur minéral tel que d'hexacyanoferrate insoluble.

De plus, les excellentes propriétés de tenue et de stabilité mécaniques du matériau selon l'invention, résultant de sa structure spécifique permettent son conditionnement en colonne et la mise en oeuvre en continu du procédé de fixation, par exemple en lit fluidisé, qui peut ainsi être facilement intégré dans une installation existante, par exemple dans une chaîne ou ligne de traitement comprenant plusieurs étapes.

Les solutions qui peuvent être traitées par le procédé de l'invention et avec le matériau solide composite fixant des polluants minéraux selon l'invention, sont très variées, et peuvent même contenir par exemple des agents corrosifs, acides, ou autres, du fait de l'excellente stabilité chimique du matériau selon l'invention.

Le matériau selon l'invention est utilisable en particulier sur une très large gamme de pH. Par exemple on pourra traiter des solutions aqueuses nitriques de concentration allant par exemple de 0,1 à 3M, des solutions acides ou neutres jusqu'à un pH 8, etc. Le polluant minéral susceptible d'être fixé dans le procédé selon l'invention peut être tout polluant minéral, c'est-à-dire par exemple tout polluant issu (à base) d'un métal ou d'un isotope, de préférence d'un isotope radioactif, de ce métal, susceptible de se trouver en solution.

Ce polluant est choisi de préférence parmi les complexes anioniques, les colloïdes, les cations et leurs mélanges.

Il s'agit de préférence d'un polluant, tel qu'un cation issu d'un élément choisi parmi Tl, Fe, Cs, Co, Ru, Ag,... et les isotopes, en particulier les isotopes radioactifs de ceux-ci, parmi lesquels on peut citer $^{58}$Co, $^{60}$Co , [55-59]Fe, $^{134}$Cs, $^{137}$Cs, [103,105,105,107]Ru. Le cation métallique est en particulier le Césium Cs$^+$ ou le Thallium Tl[21].

Le complexe anionique est par exemple $RuO_4^{2-}$.

Une utilisation préférée du matériau selon l'invention est la fixation du césium qui contribue à une grande part de l'activité gamma des liquides de l'industrie nucléaire et qui est fixé sélectivement par les hexacyanoferrates.

La concentration du ou des polluant(s) tel(s) que du ou des cation(s) peut varier entre de larges limites : par exemple, elle peut être pour chacun de ceux-ci de 0,1 picogramme à 100 mg/L, de préférence de 0,01 mg/L à 10 μg/L.

La solution à traiter par le procédé de l'invention est de préférence une solution aqueuse, qui peut outre le ou les polluant(s) tel(s) que un ou des cation(s) à fixer, contenir d'autres sels en solution tels que $NaNO_3$ ou $LiNO_3$ ou encore $Al(NO_3)_3$ ou tout autre sel soluble de métal alcalin ou alcalino-terreux à une concentration pouvant atteindre jusqu'à 2 moles/L. La solution peut également contenir, comme indiqué plus haut, des acides, bases, et même des composés organiques.

La solution à traiter peut également être une solution dans un solvant organique pur tel que l'éthanol (alcool absolu), l'acétone ou autre, dans un mélange de ces solvants organiques, ou dans un mélange d'eau et d'un ou de plusieurs de ces solvants organiques miscibles à l'eau.

Le matériau selon l'invention présente ainsi l'avantage de pouvoir traiter des solutions qui ne peuvent être traitées avec des résines organiques.

Cette solution peut consister en un liquide de procédé ou en un effluent industriel ou autre qui peut être issu en particulier de l'industrie et des installations nucléaires ou de toute autre activité liée au nucléaire.

Parmi les liquides et effluents divers de l'industrie nucléaire, des installations nucléaires et des activités mettant en oeuvre des radionucléides qui peuvent être traités par le procédé de l'invention, on peut citer par exemple les eaux de refroidissement des centrales, et tous les effluents divers entrant en contact avec des radioisotopes tels que toutes les eaux de lavage, les solutions de régénération de résines etc.

Il est toutefois évident que le procédé selon l'invention peut également être mis en oeuvre dans d'autres domaines d'activités, industriels ou autres, non nucléaires.

Ainsi, les hexacyanoferrates fixent sélectivement le thallium et cette propriété pourrait être mise à profit dans l'épuration des effluents de cimenterie pour réduire ou supprimer les rejets et émissions de cet élément qui est un poison violent.

On a vu que le procédé de fixation selon l'invention est de préférence mis en oeuvre en continu, le matériau nanocomposite selon l'invention, de préférence sous forme de particules, étant alors conditionné par exemple sous forme de colonne, le matériau formant de préférence un lit fluidisé dont la fluidisation est assurée par la solution à traiter, mais le procédé de fixation peut aussi être mis en oeuvre en discontinu, en mode « batch », la mise en contact du matériau échangeur et de la solution à traiter étant alors réalisée de préférence sous agitation. Le conditionnement en colonne permet de traiter en continu des quantités importantes de solution, avec un fort débit de celles-ci.

Le temps de contact de la solution à traiter avec le matériau selon l'invention est variable et peut aller, par exemple, de 1 minute à 1 heure pour un fonctionnement en continu et, par exemple de 10 minutes à 25 heures, de préférence de 10 minutes à 24 heures, pour un fonctionnement en « batch ».

A l'issue du procédé de fixation, les polluants se trouvant dans la solution, tels que des cations, sont immobilisés dans le matériau solide nanocomposite fixateur (échangeur) selon l'invention par sorption c'est-à-dire par échange ionique ou adsorption au sein des nanoparticules au sein de la structure des nanoparticules, elles-mêmes liées chimiquement à la surface des parois des pores du support en verre.

La porosité du matériau selon l'invention, du fait qu'il est essentiellement constitué par du verre peut être facilement fermée par un traitement réalisé dans des conditions « douces », c'est-à-dire qui n'occasionnent aucune modification de ses propriétés mécaniques et chimiques et surtout aucune libération, relargage, du polluant immobilisé tel que le césium, par exemple par volatilisation de celui-ci.

Ce traitement qui permet de fermer les pores du matériau selon l'invention dans lequel les polluants sont piégés, peut être réalisé en appliquant au matériau une contrainte, « stress » extérieur qui peut être un « stress » thermique, radiatif, chimique ou autre.

Dans le cas où l'on réalise un traitement thermique, celui-ci est réalisé à basse température, à savoir généralement à une température inférieure à 1000°C, par exemple de 600 à 850°C, notamment de 800°C, pendant une durée, par exemple de 5 à 30 minutes, par exemple de 6 minutes. Un tel traitement est réalisé à une température qui est nettement inférieure aux températures mises en oeuvre pour la vitrification des supports poreux notamment en silice de l'art antérieur qui entraîne une volatilisation de polluants tels que le césium. Selon l'invention, ce traitement thermique ne provoque pas la vitrification du support mais une simple fermeture des pores de celui-ci qui est démontrée par la diminution de la surface spécifique.

Dans le cas où l'on réalise un traitement par irradiation du substrat, celui-ci est généralement un traitement de « faible énergie » réalisé par exemple par bombardement avec des ions Ar, Kr ou Xe, par exemple dans les conditions suivantes : 70 MeV Ar ou 250 MeV Kr, avec une fluence de $2 \times 10^{10}$ à $10 \times 10^{10}$ ions/cm$^2$.s.

Dans le cas où la fermeture de porosité se fait par un traitement chimique, on utilise généralement une atmosphère basique comme par exemple une atmosphère ammoniaquée, généralement à température ambiante pendant une durée, par exemple de 1 à plusieurs heures, de préférence de 1 à 12 heures.

Le matériau solide nanocomposite selon l'invention, dont la porosité a été fermée, peut être directement stocké, car ses très grandes stabilités mécaniques et chimiques et sa nature essentiellement minérale autorisent un tel stockage sans qu'il ne se produise de dégradation du produit conduisant à des émanations d'hydrogène.

Il peut cependant être éventuellement nécessaire dans certains cas d'effectuer des tests de lixiviation.

Dans le matériau solide selon l'invention dont la porosité a été fermée, on peut dire que l'on a une encapsulation du polluant tel que Cs dans un verre.

Le matériau selon l'invention peut donc être utilisé directement, moyennant un traitement simple de fermeture des pores, comme matrice de confinement, de manière sûre et fiable, sans aucun risque de relargage, libération du polluant immobilisé, tel que le césium, ce qui était impossible avec les matériaux de l'art antérieur qui nécessitent en vue du confinement, des traitements, par exemple de vitrification, réalisés à haute température provoquant la libération des polluants, en particulier du césium par volatilisation.

Le matériau selon l'invention et le procédé de fixation le mettant en oeuvre apportent une solution à un des problèmes essentiels non résolus présentés par tous les matériaux et procédés de l'art antérieur qu'ils soient notamment massifs ou composites.

L'invention va maintenant être décrite en référence aux exemples suivants donnés à titre illustratif et non limitatif.

Dans les exemples 1 à 4 qui suivent, on a tout d'abord synthétisé des poudres de verres poreux par démixtion contrôlée (Exemple 1) puis attaque chimique puis on a réalisé un greffage et une croissance de particules de nickel ferrocyanure dans ces verres poreux (Exemple 2).

Des essais d'extraction du césium à partir d'une solution riche en nitrate de sodium ont ensuite été réalisés en utilisant les poudres ainsi obtenues (Exemple 3).

Enfin, des essais de fermeture de la porosité de ces poudres afin de les transformer en un matériau massif servant de matrice pour le conditionnement du Cs ainsi piégé ont été effectués (Exemple 4).

Le mode opératoire pour ces 4 étapes est le suivant:

## Exemple 1 Synthèse des verres poreux

La composition du verre de départ est $SiO_2$ 75 mol%; $Na_2O$ 5 mole ; $B_2O_3$ 20 mol%. Les précurseurs utilisés sont respectivement des poudres commerciales de $SiO_2$ (Sifraco®), $Na_2CO_3$ (Prolabo®) et $H_3BO_3$ (Prolabo®).

Pour obtenir un lot de 100 g de verre, on effectue la pesée de 72,58 g de poudre de $SiO_2$, 8,53g de poudre de $Na_2CO_3$ et 39, 86 g de poudre de $H_3BO_3$. La silice et le carbonate de sodium sont préalablement chauffés à une température de 250°C, afin d'enlever toute trace d'eau résiduelle.

Après cette pesée, ces poudres sont intimement mélangées, puis mises dans un creuset en platine rhodié et placées dans un four à moufle.

Pour réaliser la synthèse du verre, on réalise tout d'abord un premier traitement thermique conformément au cycle suivant :

- on effectue une montée en température à raison de 100°C/h depuis la température ambiante jusqu'à 150°C, puis on observe un palier de 2 heures à cette température;
- on effectue une rampe de température à raison de 50°C/h jusqu'à 300°C, puis on observe un palier de 2 heures à cette température;
- on effectue une rampe de température à raison de 150°C/h jusqu'à 1200°C, puis une autre rampe de température de 400°C/h jusqu'à 1480°C, et on observe un palier d'une heure à cette température.

A la fin de ce premier traitement thermique, le verre fondu est coulé sur une plaque puis concassé au marteau.

Les morceaux de verre concassés sont ensuite remis dans le creuset et introduits directement dans le four porté à 1480°C, cette température est maintenue pendant 30 minutes pour une bonne homogénéisation.

Enfin, le verre fondu est à nouveau coulé sur une plaque, concassé au marteau et broyé finement à l'aide d'un vibro-broyeur.

La poudre obtenue a des grains d'une taille inférieure à 125 $\mu$m.

Pour un verre traité thermiquement pendant 24 heures à 540°C, on a réalisé l'attaque chimique suivante :

3 g de la poudre obtenue sont placés dans un Savillex® (il s'agit d'un récipient en téflon étanche) avec 30 mL d'une solution de HCl, à une concentration 0,5 mol/L.

Ce « Savillex® » est ensuite placé pendant 6 heures dans une étuve à 90°C. Après cette attaque chimique, la poudre est ensuite filtrée puis lavée à l'eau ultra pure plusieurs fois, puis séchée à l'étuve à 120°C pendant 24 heures.

Une mesure de surface spécifique et de porosité par un appareil BET est ensuite réalisée.

On obtient un échantillon microporeux (avec environ 7 m$^2$/g de microporosité)et mésoporeux avec une surface spécifique de 65 m$^2$/g et une taille de pores de 8 nm.

**Exemple 2 Greffage et synthèse de nanoparticules d'hexacyanoferrate de nickel dans le verre poreux**

Le greffage de -(CH$_2$)$_2$C$_5$H$_4$N au sein des pores du verre préparé dans l'exemple 1 se fait en portant au reflux la poudre de verre poreux dans du toluène en présence du composé organique (CH$_3$O)$_3$Si(CH$_2$)$_2$C$_5$H$_4$N pendant une nuit.
Ensuite, 2 g de la poudre de verre ainsi greffée sont mis dans une solution de [Ni(H$_2$O)$_6$]Cl$_2$ à 3,65.1$^{-2}$ M dans du méthanol.
Ce mélange est agité pendant une nuit à température ambiante.
Après filtration, la poudre est lavée plusieurs fois au méthanol, puis séchée sous vide à température ambiante pendant 24 heures.
Dans un deuxième temps, la poudre ainsi obtenue est mise dans une solution de méthanol avec 2,5.10$^{-2}$M du complexe [N(C$_4$H$_9$)$_3$][Fe(CN)$_6$]. Le mélange est agité pendant 48 heures à température ambiante. La poudre est ensuite filtrée, lavée plusieurs fois au méthanol et séchée sous vide. Ces traitements avec d'abord les sels métalliques puis les précurseurs cyanométallates sont répétés une seconde fois.
Les analyses chimiques de la poudre ainsi obtenue montrent une teneur en Fe de l'ordre de 2% en masse.

**Exemple 3 Fixation du césium**

Les poudres de verre greffées élaborées dans l'exemple 2 sont alors testées quant à la fixation du Cs (voir figure 4).
La solution utilisée pour ces essais contient du NaNO$_3$ à 0,1 mol/L et le pH est compris en 7 et 8. La teneur importante en nitrate de sodium est nécessaire pour simuler correctement la force ionique des solutions réelles industrielles.
Dans un volume de 50 mL de cette solution, on introduit 4,4 g de CsNO$_3$ (ce qui donne une concentration de 60,2 mg/L) et 50 mg du verre poreux greffé obtenu dans l'exemple 2 (soit 1 g de verre poreux greffé par L de solution).
La concentration initiale (Ci) en Cs mesurée est de 60,2 mg/L.
L'ensemble est agité pendant 25 heures à température ambiante. Après filtration, la solution est analysée par chromatographie ionique.
Après cette étape de filtration, on analyse la solution résiduelle.
La concentration finale (Cf) de Césium mesurée est 44,3 mg/L.
Le facteur de décontamination (Kd) est calculé ainsi :

$$Kd = (Ci-Cf)/Cf * Vsol/msupport$$

Ce facteur est donc égal à 372 mL/g dans cet exemple.
Dans cet exemple, on a greffé 20 mg de Fe par gramme de verre, et on a fixé 16,5 mg de Cs par gramme de verre.

**Exemple 4 Fermeture de la porosité**

La fermeture de la porosité afin de confiner le césium ainsi piégé se fait par un traitement thermique de 5 à 10 minutes à 800°C.
Par exemple, un traitement thermique de l'échantillon poreux de 6 minutes à 800°C fait diminuer la surface spécifique d'un échantillon traité thermiquement 24 heures à 540°C, puis chimiquement avec HCl 0,5 M pendant 24 heures d'une surface spécifique de 73m$^2$/g à une surface spécifique de 19 m$^2$/g, ce qui démontre la fermeture des pores.

**RÉFÉRENCES**

[1] J. Lehto, L Szirtes, "Effects of gamma irradiation on cobalt hexacyanoferrate (II) ion exchangers", Radiat. Phys. Chem. 43, (1994), 261-264.
[2] H. Loewenschuss, "Metal ferrocyanide complexes for the decontamination of caesium from aqueous radioactive waste", Radioactive waste management 2, (1982), 327-341.
[3] Mimura et al. J., Nucl. Sci Technol., 34,(1997), 484, et 34, (1997), 607.

[4] E.H. Tusa, A. Paavola, R. Harjula, J. Lehto, "Industrial scale removal of cesium with hexacyanoferrate exchanger - Process realization and test run", Nuclear Technology, 107, (1994), 279.

[5] R. Harjula, J. Lehto, A. Paajanen, L. Brodkin, E. Tusa, "Removal of radioactive cesium from nuclear waste solutions with the transition metal hexacyanoferrate ion exchanger CsTreat", Nuclear Science and Engineering, 137, (2001), 206-214.

[6] R. Harjula, J. Lehto, A. Paajanen, E. Tusa, P. Yarnell, "Use inorganic ion exchange materials as precaot filters for nuclear waste effluent treatment", Reactive and Functional Polymers, 60, (2004), 85-95.

[7] H. Mimura, M Kimura, K. Akiba, Y. Onodera, "Selective removal of cesium from highly concentrated sodium nitrate neutral solutions by potassium nickel hexacyanoferrate (II)-loaded silica gels", Solvent extraction and ion exchange, 17(2), 403-417, (1999).

[8] R. D. Ambashta, P. K. Wattal, S. Singh, D. Bahadur, "Nano-aggregates of hexacyanoferrate (II)-loaded magnetite for removal of cesium from radioactive wastes", Journal of Magnetism and Magnetic Materials, 267, (2003), 335-340.

[9] A. Mardan, R. Ajaz, "A new method for preparation of silica potassium cobalt hexacyanoferrate composite ion exchanger from silica sol", J. Radioanalytical and Nuclear Chemistry, Vol. 251, No. 3, (2002), 359-361.

[10] L. Sharygin, A. Muromskiy, M. Kalyagina, S. Borovkov, "A granular inorganic cation-exchanger selective to cesium", J. Nuclear Science and Technology, 44 (5), 767-773, (2007).

[10 bis] L.M. Sharygin ; V.E. Moiseev ; A. Yu Muromski, et al., « Inorganic spherical granual composite sorbent based on zirconium hydroxide and its production process », RU-A-2113024.

[11] C. Loos-Neskovic, C. Vidal-Madjar, J. Dulieu, A. Pantazaki, Demande FR-A1-2 765 812 (July 9 1997), Demande WO-A1-99/02255.

[12] C. Loos-Neskovic, C. Vidal-Madjar, B. Jimenez, A. Pantazaki, V. Federici, A. Tamburini, M. Fedoroff, E. Persidou, "A copper hexacyanoferrate/polymer/silica composite as selective sorbent for the decontamination of radioactive caesium", Radiochim. Acta., 85, (1999), 143-148.

[13] S. Milonjic, I. Bispo, M. Fedoroff, C. Loos-Neskovic, C. Vidal-Madjar, "Sorption of cesium on copper hexecyaniferrate/polymer/silica composites in batch and dynamic conditions", Journal of Radioanalytical and Nuclear Chemistry, Vol. 252, (2002), 497-501.

[14] Chin-Yuang Chang, L. K. Chau, W. P. Hu, C. Y. Wang, J. H. Liao, "Nickel hexacyanoferrate multilayers on functionalized mesoporous silica supports for selective sorption and sensing of cesium", Microporous and mesoporous materials, 109, (2008), 505-512.

[15] Y. Lin, X. Cui, "Electrosynthesis, characterization and application of novel hybrid materials based on carbon nanotube-polyaniline-nickel hexacyanoferrate nanocomposites", Journal of Materials Chemistry, 16, (2006), 585-592.

[16] Folch, B., Guari et al., "Synthesis and behaviour of size controlled cyano-bridged coordination polymer nanoparticles within hybrid mesoporous silica", (2008), New Journal of Chemistry, Vol. 32, Number 2, 273-282.

**Revendications**

1. Matériau solide nanocomposite comprenant des nanoparticules, ayant de préférence une forme de sphère ou de sphéroïde, d'un polymère de coordination métallique à ligands CN comprenant des cations $M^{n+}$, où M est un métal de transition, et n est 2 ou 3 ; et des anions $[M'(CN)_m]^{x-}$, où M' est un métal de transition, x est 3 ou 4, et m est 6 ou 8 ; lesdits cations $M^{n+}$ du polymère de coordination étant liés par une liaison organométallique à un groupe organique d'un greffon organique fixé chimiquement à l'intérieur des pores d'un support en verre poreux, et les pores du verre poreux étant obtenus par attaque chimique sélective de la phase boratée d'un verre borosilicaté massif dont la composition se situe dans la zone de démixtion du diagramme de phase $SiO_2$-$Na_2O$-$B_2O_3$.

2. Matériau selon la revendication 1, dans lequel $M^{n+}$ est $Fe^{2+}$, $Ni^{2+}$, $Fe^{3+}$ ou $Co^{2+}$ ; et dans lequel M' est $Fe^{2+}$ ou $Fe^{3+}$ ou $Co^{3+}$ et m est 6, ou bien M' est $Mo^{5+}$ et m est 8.

3. Matériau selon l'une quelconque des revendications précédentes, dans lequel $[M'(CN)_m]^{x-}$ est $[Fe(CN)6]^{-3}$ , $[Fe(CN)_6]^{4-}$, $[Co(CN)_6]^{3-}$ ou $[Mo(CN)_8]^{3-}$.

4. Matériau selon l'une quelconque des revendications précédentes, dans lequel les cations $M^{n+}$ sont des cations $Ni^{2+}$, $Fe^{2+}$ ou $Fe^{3+}$ et les anions sont des anions $[Fe(CN)_6]^{3-}$ ou $[Fe(CN)_6]^{4-}$, ou les cations sont des cations $Fe^{3+}$ et les anions sont des anions $[Mo(CN)_8]^{3-}$, ou les cations sont des cations $Co^{2+}$ ou $Ni^{2+}$ et les anions sont des anions $[Co(CN)_6]^{3-}$.

5. Matériau selon l'une quelconque des revendications précédentes, dans lequel les nanoparticules ont une taille, telle qu'un diamètre, de 3 nm à 30 nm.

6.  Matériau selon l'une quelconque des revendications précédentes, dans lequel le groupe organique est choisi parmi les groupes azotés tels que la pyridine et les amines ; et les groupes oxygénés tels que les acétylacétonates, et les carboxylates.

7.  Matériau selon l'une quelconque des revendications précédentes, dans lequel le support se présente sous la forme de particules telles que des billes par exemple avec une granulométrie de 10 à 500 $\mu$m, de fibres, de tubes, ou de plaques.

8.  Matériau selon l'une quelconque des revendications précédentes, dans lequel le support a une surface spécifique BET de 10 à 500 $m^2$/g, une porosité de 25 à 50% en volume, une taille moyenne des pores de 2 à 120 nm, par exemple de 2 à 20 nm, et dans lequel les pores du support sont définis par des parois, murs, d'une épaisseur de 10 à 60 nm.

9.  Matériau selon l'une quelconque des revendications précédentes, dans lequel le support présente un ou plusieurs types de tailles de pores, choisi(s) parmi une microporosité, une mésoporosité et une macroporosité.

10. Procédé de préparation du matériau selon l'une quelconque des revendications 1 à 9, dans lequel on réalise les étapes successives suivantes :

    a) on prépare un support en verre poreux par attaque chimique sélective de la phase boratée d'un verre de borosilicate de sodium massif dont la composition se situe dans la zone de démixtion du diagramme de phase $SiO_2$-$Na_2O$-$B_2O_3$ ;
    b) on réalise la fixation chimique du greffon organique à l'intérieur des pores du support en verre poreux ;
    c) ôn met en contact le support en verre poreux à l'intérieur des pores duquel est fixé le greffon organique avec une solution contenant l'ion $M^{n+}$, puis on lave une ou plusieurs fois et on sèche le support ainsi obtenu ;
    d) on met en contact le support en verre poreux obtenu à l'issue de l'étape c) avec une solution d'un complexe de $[M' (CN)_m]^{x-}$, puis on lave une ou plusieurs fois et on sèche le support ainsi obtenu ;
    e) on lave une ou plusieurs fois le support en verre poreux obtenu à l'issue de l'étape d), puis on le sèche ;
    f) on répète éventuellement les étapes c) à e), par exemple de 1 à 4 fois.

11. Procédé selon la revendication 10, dans lequel, préalablement à l'attaque chimique, le verre de borosilicate de sodium massif est traité thermiquement.

12. Procédé selon l'une quelconque des revendications 10 et 11, dans lequel l'attaque chimique comprend une attaque par une solution acide, telle qu'une solution d'acide chlorhydrique, suivie éventuellement par une attaque par une solution basique, telle qu'une solution de soude.

13. Procédé selon l'une quelconque des revendications 10 à 12, dans lequel le greffon organique est la pyridine, et la fixation chimique du greffon organique à l'intérieur des pores du support en verre poreux est réalisée en mettant en contact le support en verre poreux avec une solution, telle qu'une solution dans le méthanol, de $(CH_3O)_3$ Si $(CH_2)_2C_5H_4N$ ; la solution contenant l'ion $M^{n+}$ est une solution, telle qu'une solution dans le méthanol, de $[M(H_2O)_6]$ $Cl_2$ ou $[M(H_2O)_6]Cl_3$ ; et le complexe de $[M'(CN)_m]^{x-}$ répond à la formule suivante :

    $(Cat)_x [M'(CN)_m]$,

    où M', m, et x ont la signification déjà donnée dans la revendication 1, et Cat est un cation choisi parmi les cations de métaux alcalins tels que K ou Na, les ammoniums quaternaires tels que le Tétrabutylammonium (« TBA »), et les phosphoniums tels que le tétraphénylphosphonium (« $PPh_4$ »).

14. Procédé de fixation, de préférence réalisé en continu, d'au moins un polluant minéral contenu dans une solution telle qu'une solution aqueuse, dans lequel on met en contact ladite solution avec le matériau solide nanocomposite selon l'une quelconque des revendications 1 à 9, de préférence conditionné en colonne, moyennant quoi le polluant minéral est immobilisé à l'intérieur des pores du matériau solide.

15. Procédé selon la revendication 14, dans lequel ladite solution est un liquide de procédé ou un effluent industriel ; par exemple ladite solution est choisie parmi les liquides et effluents issus de l'industrie et des installations nucléaires et des activités mettant en oeuvre des radionucléides.

16. Procédé selon l'une quelconque des revendications 14 et 15, dans lequel ledit polluant est présent à une concentration de 0,1 picogramme à 100 mg/L.

17. Procédé selon l'une quelconque des revendications 14 à 16, dans lequel ledit polluant est issu d'un métal ou d'un isotope radioactif dudit métal ; par exemple ledit polluant est choisi parmi les complexes anioniques, les colloïdes et les cations.

18. Procédé selon l'une quelconque des revendications 14 à 17, dans lequel ledit polluant est un élément choisi parmi Cs, Co, Ag, Ru, Fe et Tl et les isotopes de ceux-ci.

19. Procédé selon l'une quelconque des revendications 14 à 18, dans lequel à l'issue de la mise en contact, le matériau solide nanocomposite est soumis à un traitement pour en fermer les pores ; par exemple un traitement thermique réalisé à une température inférieure à 1000°C, ou un traitement radiatif généralement de faible énergie, ou un traitement chimique de préférence un traitement chimique réalisé dans une atmosphère basique telle qu'une atmosphère ammoniaquée.

**Claims**

1. A nanocomposite solid material comprising nanoparticles, having preferably the shape of a sphere or spheroid, of a metal coordination polymer with CN ligands comprising cations $M^{n+}$, wherein M is a transition metal and n is 2 or 3; and anions $[M'(CN)_m]^{x-}$, wherein M' is a transition metal, x is 3 or 4 and m is 6 or 8; said $M^{n+}$ cations of the coordination polymer being bound through an organometallic bond to an organic group of an organic graft chemically attached inside the pores of a support made of porous glass, and the pores of the porous glass being obtained by selective chemical etching of the borate phase of a solid borosilicate glass, the composition of which is located in the demixing area of the phase diagram $SiO_2$-$Na_2O$-$B_2O_3$.

2. The material according to claim 1, wherein $M^{n+}$ is $Fe^{2+}$, $Ni^{2+}$, $Fe^{3+}$ or $Co^{2+}$; and wherein M' is $Fe^{2+}$ or $Fe^{3+}$ or $Co^{3+}$ and m is 6; or else M' is $Mo^{5+}$ and m is 8.

3. The material according to any one of the preceding claims, wherein $[M'(CN)_m]^{x-}$ is $[Fe(CN)_6]^{3-}$, $[Fe(CN)_6]^{4-}$, $[Co(CN)_6]^{3-}$ or $[Mo(CN)_8]^{3-}$.

4. The material according to any one of the preceding claims, wherein the cations $M^{n+}$ are $Ni^{2+}$, $Fe^{2+}$ or $Fe^{3+}$ cations and the anions are $[Fe(CN)_6]^{3-}$ or $[Fe(CN)_6]^{4-}$ anions; or the cations are $Fe^{3+}$ cations and the anions are $[Mo(CN)_8]^{3-}$ anions; or the cations are $Co^{2+}$ or $Ni^{2+}$ cations and the anions are $[Co(CN)_6]^{3-}$ anions.

5. The material according to any one of the preceding claims, wherein the nanoparticles have a size, such as a diameter, from 3 nm to 30 nm.

6. The material according to any one of the preceding claims, wherein the organic group is selected from nitrogen-containing groups such as pyridine and amines; and oxygen-containing groups such as acetyl acetonates and carboxylates.

7. The material according to any one of the preceding claims, wherein the support appears in the form of particles such as beads, for example having a grain size from 10 to 500 $\mu$m, of fibers, of tubes or of plates.

8. The material according to any one of the preceding claims, wherein the support has a BET specific surface area from 10 to 500 $m^2$/g and a porosity from 25 to 50% by volume, an average pore size from 2 to 120 nm, for example from 2 to 20 nm, and wherein the pores of the support are defined by partitions, walls, with a thickness from 10 to 60 nm.

9. The material according to any one of the preceding claims, wherein the support has one or more types of pore sizes, selected from microporosity, mesoporosity and macroporosity.

10. A method for preparing the material according to any one of claims 1 to 9, wherein the following successive steps are carried out:

a) a support made of porous glass is prepared by selective chemical etching of the borate phase of a solid borosilicate glass, the composition of which is located in the demixing area of the phase diagram $SiO_2$-$Na_2O$-$B_2O_3$;

b) chemical attachment of the organic graft inside the pores of the support made of porous glass is achieved;

c) the support made of porous glass inside the pores of which the organic graft is attached, is brought into contact with a solution containing the $M^{n+}$ ion, and then the thereby obtained support is washed one or several times and dried;

d) the support made of porous glass obtained at the end of step c) is brought into contact with a solution of a complex of $[M'(CN)_m]^{x-}$, and then the thereby obtained support is washed one or several times and dried;

e) the support made of porous glass obtained at the end of step d) is washed one or several times, and is then dried;

f) steps c) to e) are optionally repeated, for example from 1 to 4 times.

11. The method according to claim 10, wherein, prior to chemical etching, the solid sodium borosilicate glass is heat-treated.

12. The method according to any one of claims 10 and 11, wherein chemical etching comprises etching with an acid solution, such as solution of hydrochloric acid, optionally followed by etching with a basic solution, such as a soda solution.

13. The method according to any one of claims 10 to 12, wherein the organic graft is pyridine, and the chemical attachment of the organic graft inside the pores of the support made of porous glass is achieved by bringing the support made of porous glass in contact with a solution, such as a solution in methanol, of $(CH_3O)_3 Si(CH_2)_2C_5H_4N$; the solution containing the $M^{n+}$ ion is a solution, such as solution in methanol, of $[M(H_2O)_6]Cl_2$ or $[M(H_2O)_6]Cl_3$; and the $[M'(CN)_m]^{x-}$ complex fits the following formula:

$$(Cat)_x [M'(CN)_m],$$

wherein M', m, and x have the meaning already given in claim 1, and Cat is a cation selected from cations of alkaline metals such as K or Na, quaternary ammoniums such as tetrabutylammonium (TBA), and phosphoniums such as tetraphenylphosphonium (PPh4).

14. A method, preferably carried out continuously, for fixing at least one mineral pollutant contained in a solution, such as an aqueous solution, wherein said solution is brought into contact with the nanocomposite solid material according to any one of claims 1 to 9, preferably packed in a column, whereby the mineral pollutant is immobilized inside the pores of the solid material.

15. The method according to claim 14, wherein said solution is a process liquid or an industrial effluent; for example said solution is selected from liquids and effluents from nuclear industry and nuclear installations and from activities applying radionuclides.

16. The method according to any one of claims 14 and 15, wherein said pollutant is present at a concentration of 0.1 picogram to 100 mg/L.

17. The method according to any one of claims 14 to 16, wherein said pollutant stems from a metal or from a radioactive isotope of said metal; for example said pollutant is selected from anionic complexes, colloids and cations.

18. The method according to any one of claims 14 to 17, wherein said pollutant is an element selected from Cs, Co, Ag, Ru, Fe and Tl and isotopes thereof.

19. The method according to any one of claims 14 to 18, wherein at the end of the contacting, the nanocomposite solid material is subjected to a treatment for closing its pores; for example a heat treatment carried out at a temperature below 1,000°C, or a radiative treatment generally of low energy, or a chemical treatment, preferably a chemical treatment carried out in a basic atmosphere such as an ammonia containing atmosphere.

**Patentansprüche**

1. Festes Nanoverbundmaterial umfassend Nanopartikel, die vorzugsweise eine Kugelform oder eine Sphäroid form aufweisen, aus einem Metallkoordinationspolymer mit CN-Liganden das $M^{n+}$ Kationen umfasst, worin M ein Übergangsmetall ist und n 2 oder 3 ist, und Anionen $[M'(CN)_m]^{x-}$, worin M' ein Übergangsmetall ist, x 3 oder 4 ist und m 6 oder 8 ist, wobei die Kationen $M^{n+}$ des Koordinationspolymers durch eine metallorganische Bindung an eine organische Gruppe eines chemisch im Inneren der Poren eines Trägers aus porösem Glas fixierten organischen Pfropfmittels gebunden sind und die Poren des porösen Glases durch selektive chemische Ätzung der Boratphase eines massiven Borosilikatglases erhalten wurden, dessen Zusammensetzung in der Entmischungszone des Phasendiagramms $SiO_2$-$Na_2O$-$B_2O_3$ liegt.

2. Material gemäß Anspruch 1, bei dem $M^{n+}$ $Fe^{2+}$, $Ni^{2+}$, $Fe^{3+}$ oder $Co^{2+}$ ist und bei dem M' $Fe^{2+}$ oder $Fe^{3+}$ oder $Co^{3+}$ ist und m 6 ist oder M' $Mo^{5+}$ ist und m 8 ist.

3. Material gemäß einem der vorangehenden Ansprüche, bei dem $[M'(CN)_m]^{x-}$ $[Fe(CN)_6]^{3-}$, $[Fe(CN)_6]^{4-}$, $[Co(CN)_6]^{3-}$ oder $[Mo(CN)_8]^{3-}$ ist.

4. Material gemäß einem der vorangehenden Ansprüche, bei dem die Kationen $M^{n+}$ Kationen $Ni^{2+}$, $Fe^{2+}$ oder $Fe^{3+}$ sind und die Anionen Anionen $[Fe(CN)_6]^{3-}$ oder $[Fe(CN)_6]^{4-}$ sind oder die Kationen Kationen $Fe^{3+}$ sind und die Anionen Anionen $[Mo(CN)_8]^{3-}$ sind oder die Kationen Kationen $Co^{2+}$ oder $Ni^{2+}$ sind und die Anionen Anionen $[Co(CN)_6]^{3-}$ sind.

5. Material gemäß einem der vorangehenden Ansprüche, bei dem die Nanopartikel eine Größe, wie etwa einen Durchmesser, von 3 nm bis 30 nm aufweisen.

6. Material gemäß einem der vorangehenden Ansprüche, bei dem die organische Gruppe aus den stickstoffhaltigen Gruppen wie etwa Pyridin und den Aminen und den sauerstoffhaltigen Gruppen wie etwa den Acetylacetonaten und den Carboxylaten ausgewählt ist.

7. Material gemäß einem der vorangehenden Ansprüche, bei dem der Träger in Form von Teilchen wie etwa Kugeln zum Beispiel mit einer Korngröße von 10 bis 500 $\mu$m, von Fasern, von Röhren oder von Blättchen vorliegt.

8. Material gemäß einem der vorangehenden Ansprüche, bei dem der Träger eine spezifische Oberfläche nach BET von 10 bis 500 $m^2$/g, eine Porosität von 25 bis 50 Vol.-%, eine mittlere Porengröße von 2 bis 120 nm, zum Beispiel von 2 bis 20 nm, aufweist und bei dem die Poren des Trägers durch Stege, Wände, mit einer Dicke von 10 bis 60 nm definiert sind.

9. Material gemäß einem der vorangehenden Ansprüche, bei dem der Träger in einer oder mehreren Typen Porengröße vorliegt, ausgewählt aus einer Mikroporosität, einer Mesoporosität und einer Makroporosität.

10. Verfahren zur Herstellung des Materials gemäß einem der Ansprüche 1 bis 9, bei dem die folgenden aufeinanderfolgenden Schritte ausgeführt werden:

    a) ein Träger aus porösem Glas wird durch selektive chemische Ätzung der Boratphase eines massiven Natriumborosilikatglases hergestellt, dessen Zusammensetzung in der Entmischungszone des Phasendiagramms $SiO_2$-$Na_2O$-$B_2O_3$ liegt;
    b) die chemische Fixierung des organischen Pfropfmittels wird im Inneren der Poren des Trägers aus porösem Glas durchgeführt;
    c) der Träger aus porösem Glas, im Inneren dessen Poren das organische Pfropfmittel fixiert ist, wird mit einer das Ion $M^{n+}$ enthaltenden Lösung zusammengebracht, anschließend wird der auf diese Weise erhaltene Träger einmal oder mehrmals gewaschen und getrocknet;
    d) der am Ende von Schritt c) erhaltene Träger aus porösem Glas wird mit einer Lösung eines Komplexes $[M'(CN)_m]^{x-}$ zusammengebracht, anschließend wird der auf diese Weise erhaltene Träger einmal oder mehrmals gewaschen und getrocknet;
    e) der am Ende von Schritt d) erhaltene Träger aus porösem Glas wird einmal oder mehrmals gewaschen und anschließend getrocknet;
    f) gegebenenfalls werden die Schritte c) bis e), zum Beispiel 1 bis 4 Mal, wiederholt.

**11.** Verfahren gemäß Anspruch 10, wobei das massive Natriumborosilikatglas vor der chemischen Ätzung wärmebehandelt wird.

**12.** Verfahren gemäß einem der Ansprüche 10 und 11, wobei die chemische Ätzung eine Ätzung durch eine saure Lösung wie etwa eine Salzsäurelösung, gegebenenfalls gefolgt von einer Ätzung durch eine basische Lösung wie etwa eine Ätznatronlösung umfasst.

**13.** Verfahren gemäß einem der Ansprüche 10 bis 12, wobei das organische Pfropfmittel Pyridin ist und die chemische Fixierung des organischen Pfropfmittels im Inneren der Poren des Trägers aus porösem Glas durch Zusammenbringen des Trägers aus porösem Glas mit einer Lösung wie etwa einer Lösung in Methanol von $(CH_3O)_3Si(CH_2)_2C_5H_4N$ bewerkstelligt wird, wobei die das Ion $M^{n+}$ enthaltende Lösung eine Lösung wie etwa eine Lösung in Methanol von $[M(H_2O)_6]Cl_2$ oder $[M(H_2O)_6]Cl_3$ ist und der Komplex $[M'(CN)_m]^{x-}$ der folgenden Formel entspricht:

$$(Cat)_x[M'(CN)_m],$$

worin M', m und x die bereits in Anspruch 1 angegebene Bedeutung haben und Cat ein Kation ist, das aus Alkalimetall- wie etwa K oder Na, quaternären Ammoniumwie etwa Tetrabutylammonium- ("TBA") und Phosphoniumkationen wie etwa Tetraphenylphosphonium ("PPh$_4$") ausgewählt ist.

**14.** Verfahren, das vorzugsweise kontinuierlich durchgeführt wird, zur Fixierung wenigstens eines in einer Lösung wie etwa einer wässrigen Lösung enthaltenen mineralischen Schadstoffs, wobei diese Lösung mit dem festen Nanoverbundmaterial gemäß einem der Ansprüche 1 bis 9, das vorzugsweise in einer Säule gepackt ist, zusammengebracht wird, wodurch der mineralische Schadstoff im Inneren der Poren des festen Materials immobilisiert wird.

**15.** Verfahren gemäß Anspruch 14, wobei die Lösung eine Prozeßflüssigkeit oder ein Industrieabfall ist und diese Lösung zum Beispiel aus Flüssigkeiten und Abfälle, die aus der kerntechnische Industrie und kerntechnischen Anlagen und Radionuklide freisetzenden Aktivitäten stammen, ausgewählt sind.

**16.** Verfahren gemäß einem der Ansprüche 14 und 15, wobei der Schadstoff in einer Konzentration von 0,1 Picogramm bis 100 mg/l vorliegt.

**17.** Verfahren gemäß einem der Ansprüche 14 bis 16, wobei der Schadstoff aus einem Metall oder einem radioaktiven Isotop dieses Metalls stammt und der Schadstoff zum Beispiel aus anionischen Komplexen, Kolloiden und Kationen ausgewählt ist.

**18.** Verfahren gemäß einem der Ansprüche 14 bis 17, wobei der Schadstoff ein aus Cs, Co, Ag, Ru, Fe und Tl und deren Isotopen ausgewähltes Element ist.

**19.** Verfahren gemäß einem der Ansprüche 14 bis 18, wobei am Ende des Zusammenbringens das feste Nanoverbundmaterial einer Behandlung zum Schließen der Poren darin, zum Beispiel einer bei einer Temperatur unter 1000 °C durchgeführten Wärmebehandlung oder einer Strahlenbehandlung mit im Allgemeinen geringer Energie oder einer chemischen Behandlung, vorzugsweise einer in einer basischen Atmosphäre wie etwa einer ammoniakalischen Atmosphäre durchgeführten chemischen Behandlung unterzogen wird.

A : domaine de cristallisation

B : extension du domaine de démixtion métastable $Na_2O-SiO_2$

C : domaine des borosilicates de sodium (verrerie de laboratoire)

D : domaine de démixtion métastable $Na_2O-B_2O_3-SiO_2$

# FIG.1

—■— TT0-TC6h- HCl 0,5M : microporosité

—O— TT0-TC24h - HCl 0,5M : microporosité + mesoporosité

—●— TT24 - TC 6h - HCl 0,5M : mesoporosité

—□— TT0 - TC6h - HCl 0,5M + NaOH 1M: macroporosité

**FIG.2**

$\bullet$ = M$^{n+}$     $\times$ = [M'(CN)$_m$]$^{X-}$

## FIG.3

sorption du Cs - Essai en "batch"
support : verre poreux + nanoparticules FeNi(CN)$_6$

*1g/L de support*
*concentration en FeNi(CN)$_6$ : 2% par masse de support*

## FIG.4

**RÉFÉRENCES CITÉES DANS LA DESCRIPTION**

**Documents brevets cités dans la description**

- RU 2113024 A
- FR A1
- FR 2765812
- WO 9902255 A1

**Littérature non-brevet citée dans la description**

- **J. LEHTO ; L SZIRTES.** Effects of gamma irradiation on cobalt hexacyanoferrate (II) ion exchangers. *Radiat. Phys. Chem,* 1994, vol. 43, 261-264
- **H. LOEWENSCHUSS.** Metal ferrocyanide complexes for the decontamination of caesium from aqueous radioactive waste. *Radioactive waste management,* 1982, vol. 2, 327-341
- **MIMURA et al.** *J., Nucl. Sci Technol.,* 1997, vol. 34, 484
- *J., NUCL. SCI. TECHNOL.,* 1997, vol. 34, 607
- **E.H. TUSA ; A. PAAVOLA ; R. HARJULA ; J. LEHTO.** Industrial scale removal of cesium with hexacyanoferrate exchanger - Process realization and test run. *Nuclear Technology,* 1994, vol. 107, 279
- **R. HARJULA ; J. LEHTO ; A. PAAJANEN ; L. BRODKIN ; E. TUSA.** Removal of radioactive cesium from nuclear waste solutions with the transition metal hexacyanoferrate ion exchanger CsTreat. *Nuclear Science and Engineering,* 2001, vol. 137, 206-214
- **R. HARJULA ; J. LEHTO ; A. PAAJANEN ; E. TUSA ; P. YARNELL.** Use inorganic ion exchange materials as precaot filters for nuclear waste effluent treatment. *Reactive and Functional Polymers,* 2004, vol. 60, 85-95
- **H. MIMURA ; M KIMURA ; K. AKIBA ; Y. ONODERA.** Selective removal of cesium from highly concentrated sodium nitrate neutral solutions by potassium nickel hexacyanoferrate (II)-loaded silica gels. *Solvent extraction and ion exchange,* 1999, vol. 17 (2), 403-417
- **R. D. AMBASHTA ; P. K. WATTAL ; S. SINGH ; D. BAHADUR.** Nano-aggregates of hexacyanoferrate (II)-loaded magnetite for removal of cesium from radioactive wastes. *Journal of Magnetism and Magnetic Materials,* 2003, vol. 267, 335-340
- **A. MARDAN ; R. AJAZ.** A new method for preparation of silica potassium cobalt hexacyanoferrate composite ion exchanger from silica sol. *J. Radioanalytical and Nuclear Chemistry,* 2002, vol. 251 (3), 359-361
- **L. SHARYGIN ; A. MUROMSKIY ; M. KALYAGINA ; S. BOROVKOV.** A granular inorganic cation-exchanger selective to cesium. *J. Nuclear Science and Technology,* 2007, vol. 44 (5), 767-773
- **L.M. SHARYGIN ; V.E. MOISEEV ; A. YU MUROMSKI et al.** *Inorganic spherical granual composite sorbent based on zirconium hydroxide and its production process*
- **C. LOOS-NESKOVIC ; C. VIDAL-MADJAR ; B. JIMENEZ ; A. PANTAZAKI ; V. FEDERICI ; A. TAMBURINI ; M. FEDOROFF ; E. PERSIDOU.** A copper hexacyanoferrate/polymer/silica composite as selective sorbent for the decontamination of radioactive caesium. *Radiochim. Acta.,* 1999, vol. 85, 143-148
- **S. MILONJIC ; I. BISPO ; M. FEDOROFF ; C. LOOS-NESKOVIC ; C. VIDAL-MADJAR.** Sorption of cesium on copper hexecyaniferrate/polymer/silica composites in batch and dynamic conditions. *Journal of Radioanalytical and Nuclear Chermistry,* 2002, vol. 252, 497-501
- **CHIN-YUANG CHANG ; L. K. CHAU ; W. P. HU ; C. Y. WANG ; J. H. LIAO.** Nickel hexacyanoferrate multilayers on functionalized mesoporous silica supports for selective sorption and sensing of cesium. *Microporous and mesoporous materials,* 2008, vol. 109, 505-512
- **Y. LIN ; X. CUI.** Electrosynthesis, characterization and application of novel hybrid materials based on carbon nanotube-polyaniline-nickel hexacyanoferrate nanocomposites. *Journal of Materials Chemistry,* 2006, vol. 16, 585-592
- **FOLCH, B., GUARI et al.** Synthesis and behaviour of size controlled cyano-bridged coordination polymer nanoparticles within hybrid mesoporous silica. *New Journal of Chemistry,* 2008, vol. 32 (2), 273-282